(19) Europäisches Patentamt
European Patent Office
Office européen des brevets

(11) EP 2 832 767 A1

(12) EUROPEAN PATENT APPLICATION

(43) Date of publication:
**04.02.2015 Bulletin 2015/06**

(51) Int Cl.:
***C08G 73/02*** *(2006.01)* ***G03G 5/05*** *(2006.01)*

(21) Application number: **13382313.8**

(22) Date of filing: **31.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Fundación Imdea Nanociencia**
  **28049 Madrid (ES)**
- **Universidad Autónoma De Madrid (UAM)**
  **28049 Madrid (ES)**
- **Universidad Complutense De Madrid**
  **28040 Madrid (ES)**

(72) Inventors:
- **Zamora Abanades, Félix Juan**
  **E-28210 Valdemorillo (ES)**
- **Mas-Balleste, Rubén**
  **E-28400 Collado Villalba (ES)**
- **Rodriguez San Miguel, David**
  **E-28029 Madrid (ES)**
- **Segura Castedo, José Luis**
  **E-28933 Móstoles (ES)**
- **De La Pena Ruigomez, Alejandro**
  **E-28035 Madrid (ES)**

(74) Representative: **ABG Patentes, S.L.**
**Avenida de Burgos, 16D**
**Edificio Euromor**
**28036 Madrid (ES)**

# (54) Method for the Synthesis of Covalent Organic Frameworks

(57) The present invention relates to a method for preparing covalent organic frameworks (COFs) comprising a plurality of amines and aldehydes subunits. Said method involves polyimines formation through condensation reactions. The invention also relates to COFs obtainable through said method in the form of a gel and in the form of a solid with sphere-like microstructures. The invention further refers to the uses of the obtained COFs in the coating surfaces, ink-jet printing, spray deposition, material encapsulation and coordination chemistry.

EP 2 832 767 A1

## Description

### FIELD OF THE INVENTION

The present invention relates to a method for preparing covalent organic frameworks (COFs) comprising a plurality of amines and aldehydes subunits. The invention further involves COFs obtainable through said method and their uses thereof.

### BACKGROUND

Nanoporous polymer networks such as metal organic frameworks (MOFs), zeolitic imidazolate frameworks (ZIFs), and covalent organic frameworks (COFs) have been received much attention due to their unique physicochemical properties and potential applications such as in electronics, sensors, catalysis, ion exchange, molecular adsorption, magnetics, energy storage and conversion just to mention a few of them. As an example, their large surface areas accompanied by uniform pores, open metal sites, and diverse available post-synthesis functionalization routes make them promising candidate materials for gas storage/separation and heterogeneous catalysis (WO 2012/082213 A2).

COFs are crystalline porous networks synthesized from organic monomers or building units linked together by strong covalent bonds between light elements (C, Si, B, O, N) into predetermined structures using the principles of reticular chemistry (WO 2011/127301 A2). This class of materials referred to as COFs were pioneered in 2005 by Yaghi and co-workers (Côté, A.P. et al. Science 2005, 310:1166-70). Yaghi and co-workers showed that self-condensation of aromatic diboronic acids or condensation of aromatic alcohols and aromatic diboronic acids in a controlled way yields crystalline porous polymers. These materials exhibit higher thermal stability and large surface areas on comparison with MOFs and ZIFs.

Although the successful design and synthesis of COFs linked by C-B, B-O, C-C, and C-Si have been demonstrated (Mastalerz, M. Angew. Chem. Int. Ed. 2008, 47:445-7; Campbell, N.L. et al. Chem. Mater. 2009, 21:204-6; Furukawa, H. et al. J. Am. Chem. Soc. 2009, 131:8875-83; El-Kaderi, H.M. et al. Science 2007, 316:268-72; Tilford R.W. et al. Chem. Mater. 2006, 18:5296-301; Dogru M. et al. Chem. Commun. 2011, 47:1707-9), other types of bonding, such C-N, have been almost unexplored (Feng, X. et al. Chem. Commun. 2011, 47:1979-81; Bojdys M.J. et al. Adv. Mater. 2010, 22:2202-5). Imine formation leading to the formation of crystalline networks was reported for the first time in 2009 (Uribe-Romo, F.J. et al. J. Am. Chem. Soc. 2009; 131:4570-1). This type of material has a potential advantage over previously described COFs, specially boron-linked COFs, due to their enhanced physicochemical stability (Dawson, R. et al. Progress in Polymer Science, 2012, 37: 530- 563) and versatility for incorporating metal ions (Ding, S.-Y. et al. J. Am. Chem. Soc. 2011:133; 19816-19822).

However, polyimines based-COFs are traditionally generated in extreme conditions and at the end are completely insoluble, and thus unprocessable (Dawson, R. et al. Progress in Polymer Science, 2012, 37: 530- 563). It has been reported the synthesis of these materials via solvothermal reaction (T≤400°C) between tetra-(4-anilyl)methane and terephthaldehyde. Pandey, P. et al. (Chem. Mater. 2010; 22:4974-9) reported the synthesis of imine-linked microporous polymer organic frameworks synthesized via Schiff base condensation between 1,3,5-triformylbenzene and several diamine monomers at temperatures higher than 150°C.

Therefore, there is a clear need to provide a suitable route for the synthesis of two-dimensional polyimine-based COFs from easily available starting materials under soft conditions with high degree of processability and structures with localization, order and sizes predetermined on demand.

### <u>Brief description of the invention</u>

As mentioned above, the object of the present invention is to provide a suitable route for the synthesis of polyimine-based COFs from easily available starting materials under soft conditions. The method of the invention focus on synthesis of two-dimensional COFs prepared by means of simple one-pot condensation reactions, in particular, the formation of polyimines with extended n-electron density. Such organic assemblies offer the opportunity, by judicious choice of building blocks, of tailoring on demand different structures with different levels of porosity. In addition, iminic nitrogen atoms located at the cavities offer an excellent platform to coordinate a wide variety of metal centers, allowing post-functionalization of the two-dimensional COFs obtained. The presence of transition metal elements in the frameworks would offer an attractive platform for combining the chemical, electronic, magnetic, optical and redox properties of metal complexes with those of the organic materials.

Therefore in a first aspect, the invention is directed to a method for preparing covalent organic frameworks (COFs) comprising:

a plurality of amine subunits selected from the group consisting of the group consisting of diamines of formula I,

triamines of formula Ia and tetraamines of formula Ib,

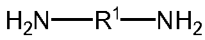
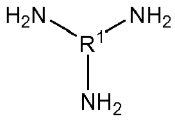
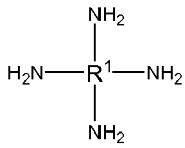

(I) (Ia) (Ib)

wherein $R^1$ is selected from the group consisting of substituted and un-substituted aryl groups, and substituted and un-substituted macrocyclic groups, and

a plurality of aldehyde subunits selected from the group consisting of dialdehydes of formula II, trialdehydes of formula IIa and tetraaldehydes of formula IIb,

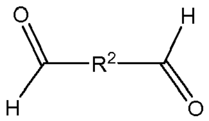
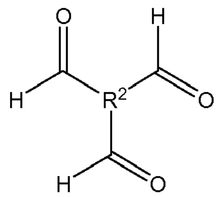
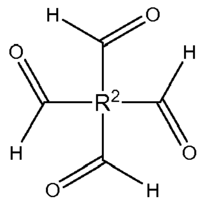

(II) (IIa) (IIb)

wherein $R^2$ is selected from the group consisting of substituted and un-substituted aryl groups, and substituted and un-substituted macrocyclic groups; and

wherein:

i) each diamine subunit of formula I is bonded with at least one aldehyde subunit of formula IIa or IIb, by an imine bond,

ii) each triamine of formula Ia is bonded to at least one aldehyde subunit of formula II or IIa, by an imine bond, or iii)each tetramine of formula Ib is bonded to at least one aldehyde subunit of formula II or IIb, by an imine bond;

wherein said method comprises the following steps:

a) adding a plurality of amine subunits of formula I, Ia or Ib to a first organic solvent;

b) adding a plurality of aldehyde subunits of formula II, IIa or IIb to a second organic solvent; and

c) mixing together the solutions obtained in steps a) and b);

The proposed subunits are commercially available or can be obtained by simple modifications of commercially available products, which reduces the costs and the time of production. In addition, the polymerization reactions proceed spontaneously at room temperature.

In a second aspect, the invention is directed to COFs obtainable according to the method as defined above.

In another aspect, the invention is directed to COFs comprising a plurality of amine subunits selected from the group consisting of diamines of formula I, triamines of formula Ia and tetraamines of formula Ib,

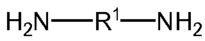
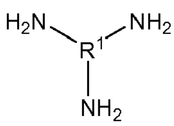
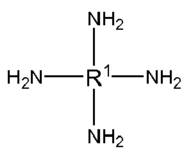

(II) (Ia) (Ib)

wherein $R^1$ is selected from the group consisting of substituted and un-substituted aryl groups, and substituted and un-substituted macrocyclic groups, and
a plurality of aldehyde subunits selected from the group consisting of dialdehydes of formula II, trialdehydes of formula IIa and tetraaldehydes of formula IIb,

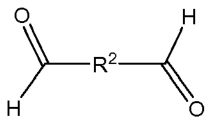
(II)

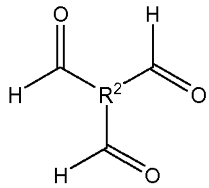
(IIa)

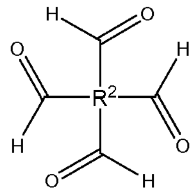
(IIb)

wherein $R^2$ is selected from the group consisting of substituted and un-substituted aryl groups, and substituted and un-substituted macrocyclic groups; and wherein:

i) each diamine subunit of formula I is bonded with at least one aldehyde subunit of formula IIa or IIb, by an imine bond,

ii) each triamine of formula Ia is bonded to at least one aldehyde subunit of formula II or IIa, by an imine bond, or
iii)each tetramine of formula Ib is bonded to at least one aldehyde subunit of formula II or IIb, by an imine bond;

characterized in that the COFs are in the form of a gel or a solid with sphere-like microstructure.

Therefore, in yet another aspect, the invention is directed to the use of the COFs in the form of a gel as defined above for coating surfaces, ink-jet printing and spray deposition. In yet another particular embodiment, the invention is directed to the use of the COFs in the form of a solid with sphere-like microstructure as defined above for material encapsulation and coordination chemistry.

In another aspect, the invention is directed to a device selected from the group consisting of solar cells, flexible displays, lighting devices, sensors, photoreceptors, batteries, capacitators, gas storage devices and gas separation devices, comprising the COFs as defined above.

## Figures

**Figure 1:** Basic building blocks combined to form a family of polyimine based materials.

**Figure 2:** SEM images of the materials obtained by polyimine condensation precipitate as gel (a) and as sphere-like microstructure (b).

**Figure 3:** $^1$H-NMR spectrum for 1,3,5-(p-aminophenyl)benzene in DMSO-$d_6$.

**Figure 4:** $^{13}$C-NMR spectrum for 1,3,5-(p-aminophenyl)benzene in DMSO-$d_6$.

**Figure 5:** Solid-state $^{13}$C CP-MAS spectrum for 1,3,5-(p-aminophenyl)benzene.

**Figure 6:** FT-IR spectrum of 1,3,5-(p-aminophenyl)benzene.

**Figure 7:** $^1$H-NMR spectrum for benzene-1,3,5-tricarbaldehyde in $CDCl_3$.

**Figure 8:** $^{13}$C-NMR spectrum for benzene-1,3,5-tricarbaldehyde in $CDCl_3$.

**Figure 9:** Solid-state $^{13}$C CP-MAS spectrum for benzene-1,3,5-tricarbaldehyde.

**Figure 10:** FT-IR spectrum of benzene-1,3,5-tricarbaldehyde.

**Figure 11:** Solid-state $^{13}$C CP-MAS spectrum of COF-1 in the form of a gel.

**Figure 12:** FT-IR spectrum of COF-1 in the form of a gel.

**Figure 13:** Stack plot of the FT-IR spectrum of COF-1 in the form of a gel (top), benzene-1,3,5-tricarbaldehyde (middle) and 1,3,5-(p-aminophenyl)benzene (bottom).

**Figure 14:** TGA trace for COF-1 synthesized in m-cresol.

**Figure 15:** TGA trace for COF-1 synthesized in acetone.

**Figure 16:** 2D-COF-polyimine gel reacting with a Fe(III) solution at different reaction times. After 45 h full incorporation of Fe(III) is achieved. Schematic representation of the post-functionalization of Fe(III) at the nitrogen imine atoms of the COF cavity (down-right).

**Figure 17:** (a) Raman/luminescence spectra of the 2D-COF-polyimine gel deposited as a micro-droplet on a $SiO_2$ substrate. (b) PL image formed by quasi-elastically scattered light -100 to +100 $cm^{-1}$ from the laser line of the same micro-droplet showing strong emission.

**Figure 18:** (a) Optical image of the array of micro-droplets deposited with the inkjet printer on commercial acetate paper. (b-d) AFM images and a height profile at the droplet interphase showing the formation of well-organized 2D materials with a controlled height of ca. 150 nm.

## Detailed description of the invention

Unless defined otherwise, all technical and scientific terms used herein have the same meaning as commonly understood to one of ordinary skill in the art to which this disclosure belongs.

As mentioned before, the present invention relates to a method for preparing covalent organic frameworks.

In the context of the present invention the term "covalent organic frameworks" or "COFs" relates to materials designed and prepared as crystalline extended two-dimensional organic structures in which the building blocks are linked by strong covalent bonds. COFs are porous and crystalline, and made entirely from light elements (H, B, C, N, and O) that are known to form strong covalent bonds in well-established and useful materials such as diamond, graphite, and boron nitride.

It is well known in the state of the art that the condensation of aniline (A) with benzaldehyde (B) results in imine bond formation (C) with elimination of water, which is a type of reaction called "polyimine condensation".

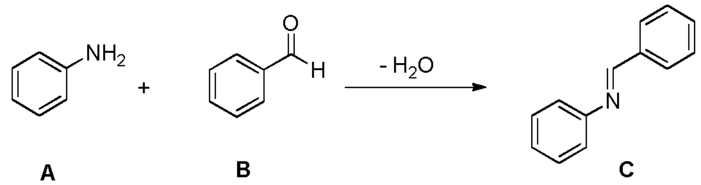


A B C

In order to prepare two-dimensional (2D) COFs, the method of the present invention is based on polyimine condensations. Based on this type of condensation reactions, the method of invention can prepare a variety of structures with different levels of porosity due to cavities formation on the extended COF structure. The form of the structure and the size of the cavities or pores can be modulated by selection of the two initial building blocks: aldehyde and amine subunits.

Therefore, the method of the present invention prepares COFs comprising a plurality of amine subunits selected from the group consisting of diamines of formula I, triamines of formula Ia and tetraamines of formula Ib,

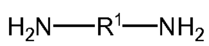
(I)

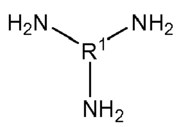
(Ia)

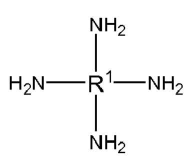
(Ib)

To create a pore structure which can be accessible to guest molecules, such as gases, an interconnected

network of channels must be created. For these pores to be stable, it is typically necessary to use rigid building blocks that prevent the networks from collapsing and hence filling space in a more efficient manner.

Therefore, in the present invention, the term "plurality" refers to at least 10 building blocks or subunits.

The term "amine subunit" refers to a multidentate core ($R^1$) comprising at least two terminal amine groups. Amine subunits with two terminal amine groups are diamines of formula I. Amine subunits with three terminal amine groups are triamines of formula Ia. Amine subunits with four terminal amine groups are tetraamines of formula Ib.

$R^1$ is selected from the group consisting of substituted and unsubstituted aryl groups, and substituted and unsubstituted macrocyclic groups or substituted.

In the context of the present invention, the term "substituted" refers to the replacement at one or more available positions by one or more suitable groups such as OR', =O, SR', SOR', $SO_2R'$, $OSO_2R'$, $OSO_3R'$, $NO_2$, NHR', $N(R')_2$, =N-R', N(R')COR', $N(COR')_2$, $N(R')SO_2R'$, N(R')C(=NR')N(R')R', CN, halogen, COR' , COOR' , OCOR', OCOOR', OCONHR', $OCON(R')_2$, CONHR', $CON(R')_2$, CON(R')OR', $CON(R')SO_2R'$, $PO(OR')_2$, PO(OR')R', PO(OR')(N(R')R'), $BO_2$, BHR' , $B(R')_2$, B(R')COR', $B(COR')_2$, substituted or unsubstituted $C_1$-$C_6$ alkyl, substituted or unsubstituted $C_2$-$C_6$ alkenyl, substituted or unsubstituted $C_2$-$C_6$ alkynyl, substituted or unsubstituted aryl, and substituted or unsubstituted heterocyclic group, wherein each of the R' groups is independently selected from the group consisting of hydrogen, OH, $NO_2$, $NH_2$, SH, CN, halogen, COH, COalkyl, COOH, substituted or unsubstituted $C_1$-$C_{12}$ alkyl, substituted or unsubstituted $C_2$-$C_{12}$ alkenyl, substituted or unsubstituted $C_2$-$C_{12}$ alkynyl, substituted or unsubstituted aryl, and substituted or unsubstituted heterocyclic group. Where such groups are themselves substituted, the substituents may be chosen from the foregoing list.

The term "halogen" refers to bromo, chloro, iodo or fluoro.

The term "$C_{1-6}$ alkyl" refers to a linear or branched hydrocarbon chain radical consisting of carbon and hydrogen atoms, containing no insaturation, having between 1 and 6, preferably between 1 and 3 ("$C_{1-3}$ alkyl"), carbon atoms and which is attached to the rest of the molecule by a single bond, including for example and in a non-limiting sense, methyl, ethyl, n-propyl, i-propyl, n-butyl, t-butyl, n-pentyl, etc.

The term "$C_{2-6}$ alkenyl" refers to a linear or branched hydrocarbon chain radical consisting of carbon and hydrogen atoms, containing at least one carbon-carbon double bond and having between 2 and 6 carbon atoms and which is attached to the rest of the molecule by a single bond.

The term "$C_{2-6}$ alkynyl" refers to a linear or branched hydrocarbon chain radical consisting of carbon and hydrogen atoms, containing at least one carbon-carbon triple bond and having between 2 and 6 carbon atoms and which is attached to the rest of the molecule by a single bond.

The term "heterocyclyl" refers to a stable 3- to 10-membered ring radical, which consists of carbon atoms and from one to five heteroatoms selected from the group consisting of nitrogen, oxygen, sulphur and boron and which can be partially or fully saturated or fully unsaturated ("heteroaryl"). For the purposes of this invention, the heterocycle can be a monocyclyl, bicyclyl or tricyclyl ring system, which can include systems of fused rings.

The term "aryl" refers to an aromatic group having between 6 and 18, comprising 1, 2, 3 or 4 aromatic rings, bound by means of a carbon-carbon bond or fused. Examples of aryl groups include substituted or unsubstituted phenyl, substituted or unsubstituted naphthyl, substituted or unsubstituted biphenyl, substituted or unsubstituted phenanthryl, substituted or unsubstituted anthryl, substituted or unsubstituted triphenyl, and substituted or unsubstituted pyrenyl.

The term "macrocyclic" is used herein to refer to cyclic compounds having between 20 carbons in the ring and optionally at least one heteroatom, preferably from one to six heteroatoms, selected from the group consisting of nitrogen, oxygen, and sulphur ("hetero-macrocyclic compound"). The term macrocyclic compound is intended to include both monocyclic and polycyclic macrocyclic compounds. Examples of preferred macrocyclic compounds for use in the present invention include substituted or unsubstituted phorphyrin, and substituted or unsubstituted phthalocyanine.

In a particular embodiment, the amine subunits of the method as defined above are selected from the group consisting of substituted and un-substituted 1,3,5-triaminobenzene, substituted and un-substituted 1,3,5-tris(4-aminophenyl)benzene, substituted and un-substituted 1,3,6,8-tetrakis(4-aminophenyl)pyrene, substituted and un-substituted 5,10,15,20-tetrakis(4-aminophenyl)phorphyrin or substituted and unsubstituted tetrakis[(4-aminophenyl)dioxaborolane]phtalocyanine.

The COFs of the invention additionally comprise a plurality of aldehyde subunits selected from the group consisting of dialdehydes of formula II, trialdehydes of formula IIa and tetraaldehydes of formula IIb,

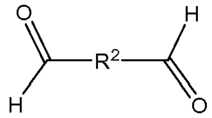 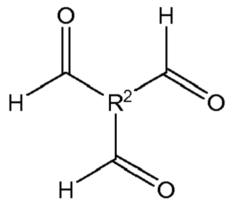 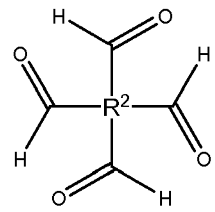

(II) (IIa) (IIb)

The term "aldehyde subunit" refers to a multidentate core ($R^2$) comprising at least two terminal aldehyde groups. Aldehyde subunits with two terminal aldehyde groups are dialdehydes of formula II. Aldehyde subunits with three terminal aldehyde groups are trialdehyde of formula IIa. Aldehyde subunits with four terminal aldehyde groups are tetraaldehyde of formula IIb. $R^2$ is selected from the group consisting of substituted and unsubstituted aryl groups, and substituted and un-substituted macrocyclic groups.

In a particular embodiment, the aldehyde subunits of the method as defined above are selected from the group consisting of substituted and un-substituted 1,3,5-benzenetricarbaldehyde, substituted and un-substituted 1,3,5-tris(4-formylphenyl)benzene, substituted and un-substituted 1,3,6,8-tetrakis(4-formylphenyl)pyrene, substituted and un-substituted 5,10,15,20-tetrakis(4-formylphenyl)phorphyrin and substituted and un-substituted tetrakis[(4-formylphenyl) phtalocyanine.

The proposed subunits are commercially available or can be obtained by simple modifications of commercially available products. For example, terephthaldehyde and 1,3,5-benzenetricarbaldehyde are commercially available while 1,3,5-tris(4-formylphenyl)benzene can be obtained in one step from commercially available 1,3,5-tribromobenzene and 4-formylphenylboronic acid.

Therefore, in the method of the present invention each multidentate core or subunit is linked to at least one other multidentate core or subunit as follows:

i) each diamine subunit of formula I is bonded with at least one aldehyde subunit of formula IIa or IIb, by an imine bond (see Figure 1, i)),

ii) each triamine of formula Ia is bonded to at least one aldehyde subunit of formula II or IIa, by an imine bond (see Figure 1, ii)), or

iii)each tetramine of formula Ib is bonded to at least one aldehyde subunit of formula II or IIb, by an imine bond (see Figure 1, iii)).

However, the amine subunits of formula I, Ia or Ib can be situated within the COF network or at the terminal positions of the COF network.

Therefore, in a preferred embodiment:

i) each diamine subunit of formula I within the COF network is bonded with two aldehyde subunits of formula IIa or IIb, and each diamine subunit of formula I at the terminal positions of the COF network is linked to one aldehyde subunit of formula IIa or IIb, by an imine bond

ii) each triamine of formula Ia within the COF network is bonded to two or three aldehyde subunits of formula II or IIa, and each diamine subunit of formula I at the terminal positions of the COF network is linked to one or two aldehyde subunit of formula II or IIa, by an imine bond, or

iii)each tetramine of formula Ib within the COF network is bonded to two, three or four aldehyde subunit of formula II or IIb, and each tetramine of formula Ib at the terminal positions of the COF network is bonded to one, two or three aldehyde subunit of formula II or IIb, by an imine bond.

The method of the present invention as defined above comprises the following steps:

a) adding a plurality of amine subunits of formula I, Ia or Ib to a first organic solvent;

b) adding a plurality of aldehyde subunits of formula II, IIa or IIb to a second organic solvent; and

c) mixing together the solutions obtained in steps a) and b);

As a result of this mixture, a reaction between the amine and the aldehyde takes place forming imine bonds, so that 2D COFs are obtained as a precipitate. This mixture (step c)) takes place at room temperature by mixing solutions of a) and b) in different solvents. The authors of the present invention have found that using different solvent for the polycondensation reaction the microstructure of the resulting COFs can be controlled.

Therefore, in a particular embodiment, the method as defined above further characterized in that the combination of the first organic solvent and the second organic solvent of steps a) and b) gives a factor F higher than 50.

In the present invention, the factor F is defined as follows:

$$F = \frac{V1 \cdot i1 + V2 \cdot i2}{V1 + V2}$$

wherein:

*V*1 is the volume of the first organic solvent used in the step a) of the method as defined above;

*V*2 is the volume of the second organic solvent used in the step b) of the method as defined above;

*i*1 is the result from multiplying the dielectric constant of the first organic solvent used in the step a) of the method as defined above, by the viscosity of the first organic solvent used in the step a) of the method as defined above; and

*i*2 is the result from multiplying the dielectric constant of the second organic solvent used in the step b) of the method as defined above, by the viscosity of the second organic solvent used in the step b) of the method as defined above.

Without being bound by any particular theory, it is believed that in more viscous solvents with relatively higher density (higher number of solvent molecules per volume) such as m-cresol or dimethylformamide, the reaction results in the immediate precipitation of a yellow gel (see Figure 2, a)).

In a preferred embodiment, the first organic solvent and the second organic solvent of steps a) and b) giving a factor F higher than 50 as defined above, are independently selected from the group consisting of m-cresol, dimethyl sulfoxide and mixtures thereof.

In another particular embodiment, the method as defined above further characterized in that the combination of the first organic solvent and the second organic solvent of steps a) and b) gives a factor F lower than 50.

Without being bound by any particular theory, it is believed that in less viscous solvents with a relatively lower density such as acetone, tetrahydrofurane, methanol or ethanol, yellow solids with sphere-like microstructure precipitate (see Figure2, b)).

In a preferred embodiment, the first organic solvent and the second organic solvent of steps a) and b) giving a factor F lower than 50 as defined above, are independently selected from the group consisting of dichloromethane, chloroform, methanol, ethanol, acetone, tetrahydrofuran and mixtures thereof.

In some cases, the method as defined above requires an acid catalyst. Therefore, in yet another particular embodiment, the method as defined above, further comprises:

d) adding an acid solution to the resulting mixture of step c); and
e) filtrating the product obtained in step d) to discard the liquid.

In a preferred embodiment, the acid solution of the step c) is selected from the group consisting of protonic acids solutions namely, acetic acid, trifluoroacetic acid, sulphuric acid, phosphoric acid and hydrofluoric acid as well as Lewis acids solutions such as $ZnCl_2$, $AlCl_3$, $FeCl_3$, $MgBr_2$ and $Mg(ClO_4)_2$ and mixtures thereof, more preferably acetic acid solution.

In another aspect, the invention is directed to COFs obtainable according to the method as defined above.

In a particular embodiment, the COFs obtainable according to the method as defined above are in the form of a gel.

In another particular embodiment, the COFs obtainable according to the method as defined above are in the form of a solid with sphere-like microstructure.

In another aspect, the invention is directed to COFs comprising:

a plurality of amine subunits selected from the group consisting of diamines of formula I, triamines of formula Ia and

tetraamines of formula Ib,

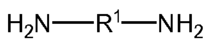

(I)

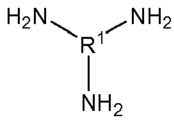

(Ia)

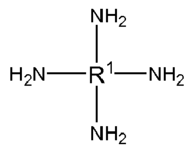

(Ib)

wherein $R^1$ is selected from the group consisting of substituted and un-substituted aryl groups, and substituted and un-substituted macrocyclic groups, and

a plurality of aldehyde subunits selected from the group consisting of dialdehydes of formula II, trialdehydes of formula IIa and tetraaldehydes of formula IIb,

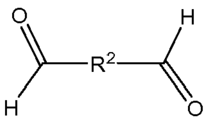

(II)

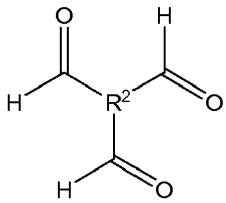

(IIa)

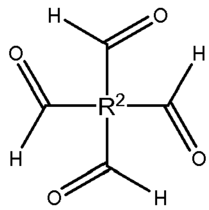

(IIb)

wherein $R^2$ is selected from the group consisting of substituted and un-substituted aryl groups, and substituted and un-substituted macrocyclic groups or substituted; and wherein:

i) each diamine subunit of formula I is bonded with at least one aldehyde subunit of formula IIa or IIb, by an imine bond,

ii) each triamine of formula Ia is bonded to at least one aldehyde subunit of formula II or IIa, by an imine bond, or iii) each tetramine of formula Ib is bonded to at least one aldehyde subunit of formula II or IIb, by an imine bond;

characterized in that the COFs are in the form of a gel or a solid with sphere-like microstructure.

However, the amine subunits of formula I, Ia or Ib can be situated within the COF network or at the terminal positions of the COF network.

Therefore, in a preferred embodiment:

i) each diamine subunit of formula I within the COF network is bonded with two aldehyde subunits of formula IIa or IIb, and each diamine subunit of formula I at the terminal positions of the COF network is linked to one aldehyde subunit of formula IIa or IIb, by an imine bond

ii) each triamine of formula Ia within the COF network is bonded to two or three aldehyde subunits of formula II or IIa, and each diamine subunit of formula I at the terminal positions of the COF network is linked to one or two aldehyde subunit of formula II or IIa, by an imine bond, or

iii)each tetramine of formula Ib within the COF network is bonded to two, three or four aldehyde subunit of formula II or IIb, and each tetramine of formula Ib at the terminal positions of the COF network is bonded to one, two or three aldehyde subunit of formula II or IIb, by an imine bond.

The COFs in the form of a gel present a layered structure constituted by stacked flakes. Therefore, in a particular embodiment, the COFs in the form of a gel as defined above comprise layers with an average thickness between 300 and 0.3 nm.

In another particular embodiment, the COFs in the form of a solid with sphere-like microstructure as defined above comprise spheres with an average diameter between 10 and 1000 nm.

The presence of iminic nitrogens in the COFs as defined above, enable further post-functionalization by coordination of metal centers. These iminic nitrogens are located at the cavities of the COFs as defined above.

Therefore, in a particular embodiment, the COFs as defined above, further comprises a metal atom coordinated to iminic nitrogens. In a preferred embodiment, the metal atom is selected from the group consisting of Mn, Fe, Co, Ni, Ru, Pt, Pd, Rh, Ir, Au, Nd, Eu and mixtures thereof.

Such metal coordination confers to the material added chemical, electronic, magnetic, optical and redox features.

Therefore, in a particular embodiment, the invention is directed to the use of the COFs in the form of a gel as defined above for coating surfaces, ink-jet printing and spray deposition. In yet another particular embodiment, the invention is directed to the use of the COFs in the form of a solid with sphere-like microstructure as defined above for material encapsulation and coordination chemistry.

In another aspect, the invention is directed to a device selected from the group consisting of solar cells, flexible displays, lighting devices, sensors, photoreceptors, batteries, capacitators, gas storage devices and gas separation devices, comprising the COFs as defined above.

## EXAMPLES

The present invention will now be described by way of examples which serve to illustrate the construction and testing of illustrative embodiments. However, it will be understood that the present invention is in no way limited to the examples set forth below.

To this effect, the condensation of the building blocks 1,3,5-tris(4-aminophenyl)benzene **(1)** and 1,3,5-benzenetricarbaldehyde **(2)** to produce a material with an extended hexagonal 2-D framework structure named as **COF-1** is described.

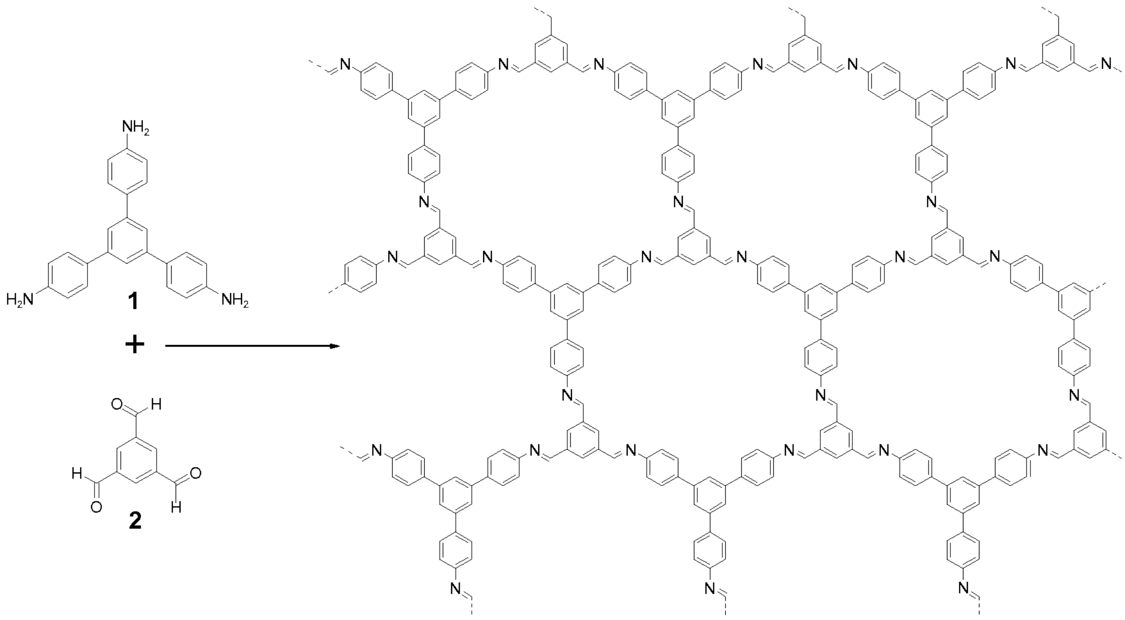

**1**

**2**

**COF-1**

All chemicals and solvents were obtained commercially and used without further purification. The starting materials, 1,3,5-(4-aminophenyl) benzene **(1)** and benzene-1,3,5-tricarbaldehyde **(2)**, were synthesized using published procedures. Solvents and reagents for the preparation of these materials were dried by usual methods prior to use and typically used under inert gas atmosphere. All reactions for the preparation of COF-1 were performed at ambient laboratory conditions, and no precautions taken to exclude oxygen or atmospheric moisture.

Elemental microanalyses were obtained using LECO CHNS-932 elemental analyzer. NMR were recorded on a Bruker DPX 300 apparatus and the chemical shifts in ppm were reported relative to tetramethylsilane (TMS) at 0.0 ppm. The chemical shifts of deuterated solvents are: $CDCl_3$ at 7.26 and 77.16 ppm; DMSO-$d_6$ at 2.50 and 39.52 ppm (for $^1$H-NMR and $^{13}$C-NMR respectively in each one). The splitting patterns are designated as follows: s (singlet), bs (broad singlet), d (doublet), t (triplet), q (quadruplet) and m (multiplet). Phenyl and benzene fragments are named Ph and Benz respectively in the spectral assignment.

High Resolution solid-state nuclear magnetic resonance (NMR) spectra were recorded at ambient pressure on a Bruker AV 400 WB spectrometer using a triple channel (BL4 X/Y/1H) and Bruker magic angle-spinning (MAS) probe with 4 mm (outside diameter) zirconia rotors. The magic angle was adjusted by maximizing the number and amplitudes

of the signals of the rotational echoes observed in the 79Br MAS FID signal from KBr. Cross-polarization with MAS (CP-MAS) used to acquire 13C data at 100.61 MHz. The $^{1}H$ ninety degree pulse widths were both 3.1 μs. The CP contact time varied from 3.5 ms. High power two-pulse phase modulation (TPPM) 1H decoupling was applied during data acquisition. The decoupling frequency corresponded to 80 kHz. The MAS samplespinning rate was 10 kHz. Recycle delays between scans were 4s, depending upon the compound as determined by observing no apparent loss in the $^{13}C$ signal from one scan to the next. The $^{13}C$ chemical shifts are given relative to tetramethylsilane as zero ppm, calibrated using the methylene carbon signal of adamantane assigned to 29.5 ppm as secondary reference.

FT-IR spectra of starting materials and synthesized COFs were obtained as KBr pellets using FTIR Bruker IFS66v spectrometer with transmittance / absorbance measures Accessory (BRUKER/HARRICK) and MCT detector (7000-550 $cm^{-1}$ measures (IR medium)), signals are given in wavenumbers ($cm^{-1}$) and described as: very strong (vs), strong (s), medium (m), shoulder (sh), weak (w), very weak (vw) or broad (br). Assignment and analysis of infrared absorption bands of starting materials and COF products are presented in this section. The data and its discussion pertaining to the IR spectral relationships between these compounds are offered as support for the formation of the covalently linked extended solids. The vibrational modes of the COF-1 are analyzed as the convolution of 1,3,5-phenyline-trimethiylidene and 1,3,5-(p-phenylene)-benzene compared to benzene-1,3,5-tricarbaldehyde and 1,3,5-(p-aminophenyl)-benzene, respectively.

Thermal Gravimetric Analyses of samples were run on a Termobalanza TGA Q-500 thermal gravimetric analyser with samples held in a platinum pan under nitrogen atmosphere. A 10 K $min^{-1}$ ramp rate was used.

**Example 1: Characterization of the starting material 1,3,5-tris(4-aminophenyl)benzene (1).**

• $^{1}H$-NMR spectrum in DMSO-$d_6$ (300 MHz): δ = 7.48 (s, 3H, Benz), 7.47 (d, J= 8.47 Hz, 6H, Ph), 6.67 (d, J= 8.47 Hz, 6H, Ph), 5.19 (bs, 6H, -$NH_2$). **Figure 3.**

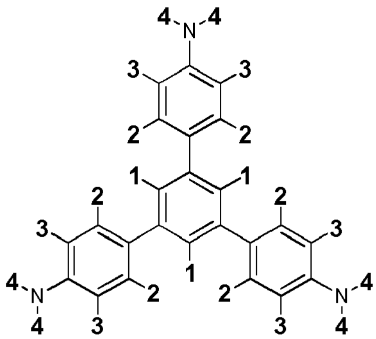

| Signal (ppm) | Assignment | Multiplicity | Integral (H) | J (Hz) | Comments |
|---|---|---|---|---|---|
| 7.48 | 1 | s | 3 | - | Aromatic proton (benzene ring, ortho-aromatic ring) |
| 7.47 | 2 | d | 6 | 8.47 | Aromatic proton (phenyl ring, ortho-aromatic ring, delta-amino) |
| 6.67 | 3 | d | 6 | 8.47 | Aromatic proton (phenyl ring, meta-aromatic ring, gamma-amino) |
| 5.75 | - | s | - | - | Signal for dichloromethane (solvent used in the synthesis) |
| 5.19 | 4 | bs | 6 | - | Aromatic amino |

• $^{13}C$-NMR spectrum in DMSO-$d_6$ (75 MHz): δ = 148.3 ($C_{NH2}$), 141.5 ($C_{Benz}$-$C_{Ph}$), 128.0 ($C_{Ph}$-$C_{Benz}$), 127.4 ($C_{Ph}$), 120.3 ($C_{Benz}$), 114.1 ($C_{Ph}$-$C_{NH2}$). **Figure 4.**

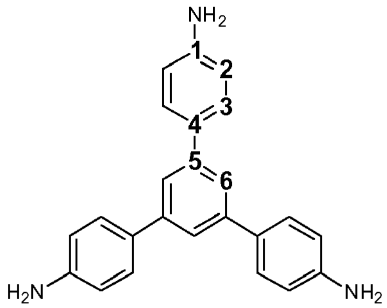

| Signal (ppm) | Assignment | Comments |
|---|---|---|
| 148.3 | 1 | Aromatic carbon (alpha-amino) |
| 141.5 | 5 | Aromatic carbon (benzene ring, alpha-aromatic, para-amino) |
| 128.0 | 4 | Aromatic carbon (phenyl ring, alpha-aromatic, delta-amino) |
| 127.4 | 3 | Aromatic carbon (phenyl ring, beta-aromatic, gamma-amino) |
| 120.3 | 6 | Aromatic carbon (benzene ring, beta-aromatic) |
| 114.1 | 2 | Aromatic carbon (phenyl ring, gamma-aromatic, beta-amino) |

• <u>Solid-state $^{13}$C CP-MAS spectrum:</u> δ (ppm) = 146.8, 143.8, 142.0, 132.9, 130.5, 129.1, 127.6, 124.5, 116.4. **Figure 5.**

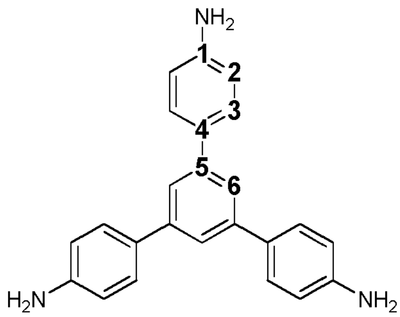

| Signal (ppm) | Assignment | Comments |
|---|---|---|
| 146.8 | 1 | Aromatic carbon (alpha-amino) |
| 143.8 | - | Signals for toluene (solvent used in the synthesis) |
| 142.0 | 5 | Aromatic carbon (benzene ring, alpha-aromatic, para-amino) |
| 132.9 | - | Signals for toluene (solvent used in the synthesis) |
| 130.5 | - | |
| 129.1 | 4 | Aromatic carbon (phenyl ring, alpha-aromatic, delta-amino) |
| 127.6 | 3 | Aromatic carbon (phenyl ring, beta-aromatic, gamma-amino) |
| 124.5 | 6 | Aromatic carbon (benzene ring, beta-aromatic) |
| 116.4 | 2 | Aromatic carbon (phenyl ring, gamma-aromatic, beta-amino) |

• <u>FT-IR spectrum (KBr pellet, $cm^{-1}$)</u>: 3434.1, 3354.6, 3209.5, 3052.8, 3028.2, 2888.1, 1898.1, 1777.6, 1752.0, 1621.4, 1606.9, 1515.3, 1448.3, 1428.0, 1405.9, 1356.2, 1280.5, 1241.0, 1176.4, 1128.2, 1066.0, 1027.9, 961.8, 891.0, 871.7, 828.8, 814.8, 787.3, 730.4, 707.3, 649.4, 605.5, 571.3, 559.7, 523.6, 492.7, 419.0. **Figure 6.**

**Example 2: Characterization of the starting material 1,3,5-benzenetricarbaldehyde (2).**

• $^{1}$H-NMR spectrum for benzene-1,3,5-tricarbaldehyde **(2)** in $CDCl_3$ (300 MHz) : δ = 10.21 (s, 3H, -CHO), 8.64 (s, 3H, Benz). **Figure 7.**

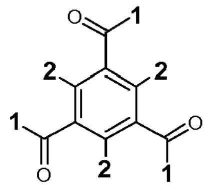

| Signal (ppm) | Assignment | Multiplicity | Integral (H) | Comments |
|---|---|---|---|---|
| 10.21 | 1 | s | 3 | Carbonyl proton (alpha-aromatic) |
| 8.64 | 2 | s | 3 | Aromatic proton (beta-carbonyl) |

• $^{13}$C-NMR spectrum for benzene-1,3,5-tricarbaldehyde **(2)** in $CDCl_3$ (75 MHz) : δ = 189.9 (-CHO), 138.0 ($C_{Benz}$-CHO), 134.9 ($C_{Benz}$). **Figure 8.**

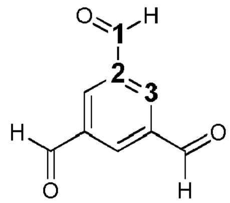

| Signal (ppm) | Assignment | Comments |
|---|---|---|
| 189.9 | 1 | Carbonyl (alpha-aromatic) |
| 138.0 | 2 | Aromatic carbon (alpha-carbonyl) |
| 134.9 | 3 | Aromatic carbon (beta-carbonyl) |

• Solid-state $^{13}$C CP-MAS spectrum: δ (ppm) = 194.4, 137.5, 137.1. **Figure 9.**

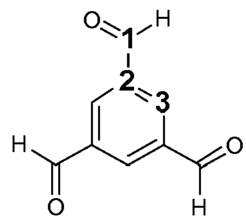

| Signal (ppm) | Assignment | Comments |
|---|---|---|
| 194.4 | 1 | Carbonyl (alpha-aromatic) |
| 137.5 | 2 | Aromatic carbon (alpha-carbonyl) |
| 137.1 | 3 | Aromatic carbon (beta-carbonyl) |

• FT-IR spectrum (KBr pellet, $cm^{-1}$): 3441.8, 3366.6, 3062.4, 3039.7, 2955.9, 2927.4, 2876.3, 2855.6, 2780.4, 2743.7, 2704.7, 2389.4, 2256.3, 1877.4, 1830.1, 1694.2, 1656.6, 1595.3, 1455.0, 1379.3, 1267.5, 1228.0, 1142.6, 1018.7, 966.2,

891.0, 739.1, 671.6, 651.8, 427.6. **Figure 10.**

**Example 3: Preparation of COF-1 in the form of a gel.**

All reactions for the preparation of COF-1 were performed at ambient laboratory conditions, and no precautions taken to exclude oxygen or atmospheric moisture.

100 mg (0.285 mmol) of 1,3,5-tris(4-aminophenyl)benzene **(1)** were dissolved in 5 mL of m-cresol. On the other hand, 46.1 mg (0.285 mmol) of 1,3,5-benzenetricarbaldehyde **(2)** were dissolved in another 5 mL of m-cresol.

Both solutions were subsequently mixed at room temperature and afterwards 1 mL of 99.8% acetic acid was added while the mixture was hand shaken. It was observed, almost immediately after the addition of the acetic acid, the formation of a yellow gel. The gel was filtered, washed twice with methanol and THF and soxhlet extracted with methanol (24 h) and THF (24 h). The solid thus obtained was dried under vacuum at 150°C for 24 h to yield 126 mg (96%) of COF-1 as a yellow solid.

**Example 4: Characterization of COF-1 in the form of a gel.**

• Solid-state $^{13}C$ CP-MAS spectrum (100.61 MHz): $\delta$ (ppm) = 156.7, 147.8, 137.5, 127.9, 121.5, 115.3. **Figure 11.**

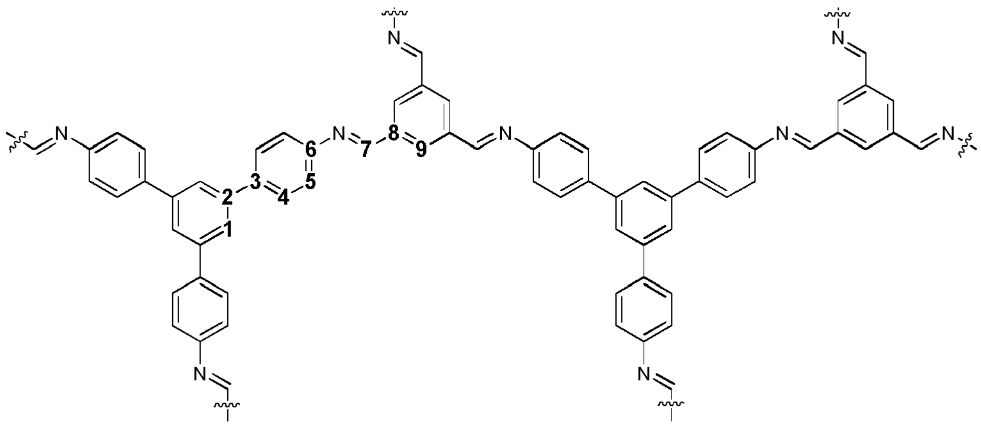

| Signal (ppm) | Assignment | Comments |
|---|---|---|
| 156.7 | 7 | Imine carbon (alpha-imine, alpha-aromatic) |
| 147.8 | 6 | Aromatic carbon (alpha-imine) |
| 137.5 | 2, 8, 9 | Aromatic carbon (epsilon-imine, alpha-vinyl, beta-vinyl) |
| 127.9 | 3, 4 | Aromatic carbon (delta-imine, gamma-imine) |
| 121.5 | 1 | Aromatic carbon (zeta-imine) |
| 115.3 | 5 | Aromatic carbon (beta-aliphatic, beta-imine) |

Solid-state $^{13}C$ Cross polarization/magic angle spinning nuclear magnetic resonance (CP/MAS NMR) spectroscopy gave signals at 156.7 ppm corresponding to the imine carbon and at 147.8 ppm which can be attributed to the aromatic carbon directly bonded with the imine N atom. The remaining aromatic signals of the polymeric 2D-COF appear between 115.3 and 137.5 ppm.

• FT-IR spectrum (KBr pellet, $cm^{-1}$): 3421.1, 3074.9, 3027.2, 2964.5, 2918.7, 2867.6, 1900.0, 1793.0, 1773.2, 1700.4, 1696.6, 1617.5, 1589.5, 1516.3, 1500.3, 1440.1, 1391.4, 1357.2, 1282.9, 1249.2, 1219.8, 1181.2, 1136.8, 1091.0, 1011.5, 970.0, 879.9, 858.2, 826.3, 733.8, 728.0, 681.2, 660.5, 607.5, 556.4, 527.9, 514.4, 441.1, 419.4, 411.2. **Figures 12 and 13.**

| Peak ($cm^{-1}$) | Assignment and notes |
|---|---|
| 3421.1 (br) | N-H stretch from the groups present at the surface of the crystallites and incompletely reacted groups at defects in the material and unreacted starting material. |
| 3074.9 (vw) | Aromatic C-H stretch from phenyl rings in 1,3,5-(p-phenylene)-benzene and 1,3,5-phenyline-trimethiylidene. |
| 3027.2 (w) | Aromatic C-H stretch from phenyl rings in 1,3,5-(p-phenylene)-benzene and 1,3,5-phenyline-trimethiylidene. |
| 2964.5 (vw), | Alkene C-H stretching from imine. This bond has |
| 2918.7 (vw), 2867.6 (w) | several vibrational modes in the aldehyde starting material at 2955.9, 2927.4, 2876.3, 2855.6, 2780.4, 2743.7 and 2704.7 cm-1. |
| 1900.0 (w), 1793.0 (w), 1773.2 (w) | Aromatic C-H bending overtones. |
| 1700.4 (s), 1696.6 (s) | C=O stretch from the groups present at the surface of the crystallites and incompletely reacted groups at defects in the material and unreacted starting material. |
| 1617.5 (s, br) | Imine C=N stretching. This bond is also confirmed by the disappearance of the vC-N stretching mode from 1,3,5-(p-aminophenyl)-benzene (1280.5 $cm^{-1}$) and the $v_{C=O}$ stretching of benzene-1,3,5-tricarbaldehyde (1694.2 $cm^{-1}$). This signal is also overlapped with two aromatic ring-bending modes, which appear at 1621.4 and 1606.9 $cm^{-1}$ in 1,3,5-(p-phenylene)-benzene and 1595.3 $cm^{-1}$ in 1,3,5-phenyline-trimethiylidene. |
| 1589.5 (vs) | Aromatic ring stretching from phenyl rings in 1,3,5-(p-phenylene)-benzene. |
| 1516.3 (s) | Aromatic ring stretching from phenyl rings in 1,3,5-(p-phenylene)-benzene |
| 1500.3 (vs) | Aromatic C-C ring stretching from 1,3,5-phenyline-trimethiylidene ring. |
| 1440.1(s) | Aromatic C-C ring stretching from 1,3,5-(p-phenylene)-benzene. |
| 1391.4 (m) | Aromatic ring bending. |
| 1357.2 (m) | Aromatic ring stretching from 1,3,5-phenyline-trimethiylidene ring. |
| 1282.9 (m) | Imine C-C=N-C stretching. This mode is the stretching of the C-C and C-N single bonds. This mode also appears at 1280.5 $cm^{-1}$ in 1,3,5-(p-aminophenyl)benzene. |
| 1249.2 (m), 1219.8 (m), 1181.2 (m) 1136.8 (s, br) | Aromatic C-H in the plane ring vibrations from 1,3,5-(p-phenylene)-benzene ring. This modes also appears at 1241.0 and 1176.4 $cm^{-1}$ in 1,3,5-(p-aminophenyl)benzene (p- substituted rings). This mode also appears at 1142.6 $cm^{-1}$ in benzene-1,3,5-tricarbaldehyde. |
| 1011.5 (m) | Aromatic C-H in plane bending from 1,3,5-(p-phenylene)-benzene. |
| 970.0 (m) | Aromatic ring stretching from 1,3,5-(p-phenylene)-benzene. |
| 879.9 (w) | Aromatic C-H out of plane vibration from 1,3,5-(p-phenylene)-benzene. |
| 858.2 (w) | Aromatic ring stretching from 1,3,5-(p-phenylene)-benzene. |
| 826.3 (vs, br) | Aromatic ring stretching from 1,3,5-(p-phenylene)-benzene. |
| 728.0 (m) | Methylene C-H in plane bending. This mode appears in benzene-1,3,5-tricarbaldehyde at 739.1 cm-1. |
| 681.2 (m) | Aromatic ring stretching from 1,3,5-(p-phenylene)-benzene. |
| 660.5 (s) | C-Ph trihedral stretching, characteristic of 1,3,5-(p-phenylene)-benzene. Also present in 1,3,5-(p-aminophenyl)benzene (649.4 $cm^{-1}$). |
| 527.9 (s, br) | Aromatic ring bending from 1,3,5-(p-phenylene)-benzene. |

FT-IR confirms the formation of the imine bond with the presence of the imine C=N stretching at 1617.5 $cm^{-1}$. This bond is also confirmed by the almost complete disappearance of the $\nu_{C-N}$ stretching mode from 1,3,5-tris(4-aminophenyl)ben-

zene **(1)** (1283 $cm^{-1}$) and the $\nu_{C=O}$ stretching of 1,3,5-benzenetricarbaldehyde **(2)** (1697 $cm^{-1}$).

• Elementary analysis (calculated for COF-1·$2H_2O$): ($C_{33}H_{25}N_3O_2$) C (79.98%), H (5.08%), N (8.48%); Found: C (80.35 %), H (5.25%), N (8.29%).

Elemental analysis revealed that the C, H, N, and S contents were close to the calculated values for an infinite 2D sheet considering the presence of two molecules of water per repeating unit in the polymeric gel prepared using m-cresol as the solvent.

• Thermal Gravimetric Analyses (platinum pan under nitrogen atmosphere, 10 K·$min^{-1}$ ramp): COF-1 is stable in air up to 550°C, as revealed by TGA (**Figure 14**). A loss of weight of 4.6% is observed at 100°C which can be rationalized in terms of the loss of water molecules included in the porous polymeric structure and that are observed in the elemental analysis (see calculated elemental analysis above).

**Example 5: Preparation of COF-1 in the form of a solid having sphere-like microstructures.**

All reactions for the preparation of COF-1 were performed at ambient laboratory conditions, and no precautions taken to exclude oxygen or atmospheric moisture.

100 mg (0.285 mmol) of 1,3,5-tris(4-aminophenyl)benzene **(1)** were disolved in 5 mL of acetone. On the other hand, 46.1 mg (0.285 mmol) of 1,3,5-benzenetricarbaldehyde **(2)** were dissolved in another 5 mL of acetone. Both solutions were subsequently mixed at room temperature and afterwards 1 mL of 99.8% acetic acid was added while the mixture was stirred. It was observed, almost immediately after the addition of the acetic acid, the formation of a yellow precipitate. The precipitate was filtered, washed three times with water, twice with methanol and THF and Soxhlet extracted with methanol (24 h) and THF (24 h). The solid thus obtained was dried under vacuum at 150°C for 24 h to yield 107 mg (82%) of COF-1 as a yellow solid.

**Example 6: Characterization of COF-1 in the form of a solid having sphere-like microstructures.**

COF-1 obtained in the form of a gel and in the form of a solid having sphere-like microstructures show almost identical patterns when characterized by spectroscopy.

- Solid-state $^{13}C$ CP-MAS spectrum (100.61 MHz): $\delta$ (ppm) = 156.0, 148.5, 137.3, 126.8, 121.2, 116.7.
- FT-IR spectrum (KBr pellet, $cm^{-1}$): 3439, 3381, 3245, 3223, 3031, 2927, 2865, 2812, 2724, 1902, 1778, 1702, 1626, 1596, 1504, 1444, 1393, 1349, 1321, 1284, 1251, 1220, 1140, 1013, 971, 882, 859, 830, 736, 684, 661, 609, 583, 574.
- Elementary analysis (calculated for COF-1·$2H_2O$): ($C_{33}H_{25}N_3O_2$), C (83.00%), H (4.85%), N (8.80%); Found: C (82.97 %), H (4.88%), N (8.56%).
- Thermal Gravimetric Analyses (platinum pan under nitrogen atmosphere, 10 K $min^{-1}$ ramp): COF-1 is stable in air up to 550°C, as revealed by TGA (**Figure 15**). A loss of weight of 4.6% is observed at 100°C which can be rationalized in terms of the loss of water molecules included in the porous polymeric structure and that are observed in the elemental analysis (see calculated elemental analysis above).

**Example 7: Post-functionalization of COF-1 in the form of a gel by means of coordination of Fe(III).**

Fe(III) centers have been coordinated by exposition of the COF-1 in the form of a gel to solution of standard salts (chloride, acetate, nitrate or perchlorate) of Fe(III). **Figure 16** shows COF-1 in the form of a gel reacting with a Fe(III) solution at different reaction times (after 45 h full incorporation of Fe(III) is achieved) and a schematic representation the post-functionalization of Fe(III) at the nitrogen imine atoms of the COF cavity (down-right).

**Example 8: Studies of physical and chemical properties of COF-1 in the form of a gel.**

Preliminary results indicated that the COF-1 in the form of a gel shows strong emission at 589 nm when irradiated at 488 nm. Such feature is modulated upon coordination of metal centers. Dependence of the optical properties upon metal coordination could serve as distinctive analytical signal for the uptake of different metals. In addition, functionalization of the polyimine material with metal centers that are intrinsically luminescent can add new possibilities on the design of optical devices (**Figure 17**).

**Example 9: Printing application of COF-1 in the form of a gel.**

Using a high resolution printer, the COF-1 in the form of a gel can act as an ink to draw a variety of structures with highs at the nanometre scale. The position, structure and size of the nanomaterials obtained by ink-jet printing can also be modulated by the hydrophilic nature of the substrate. In particular, acetate paper results in formation of layered structures with highs of 100-200 nm. Optical image of the array of microdroplets deposited with the inkjet printer on commercial acetate paper (**Figure 18, a)**). AFM images (Figure 18**, b and c**)) and a height profile at the droplet interphase

(**Figure 18, d**)) show the formation of well-organized 2D materials with a controlled height of ca. 150 nm.

## Claims

1. A method for preparing covalent organic frameworks (COFs) comprising:

a plurality of amine subunits selected from the group consisting of diamines of formula I, triamines of formula Ia and tetraamines of formula Ib,

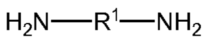

(I)

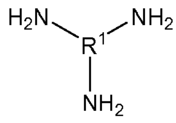

(Ia)

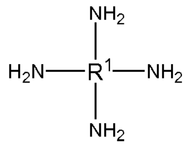

(Ib)

wherein $R^1$ is selected from the group consisting of substituted and un-substituted aryl groups, and substituted and un-substituted macrocyclic groups, and
a plurality of aldehyde subunits selected from the group consisting of dialdehydes of formula II, trialdehydes of formula IIa and tetraaldehydes of formula IIb,

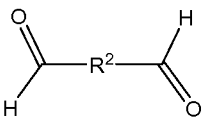

(II)

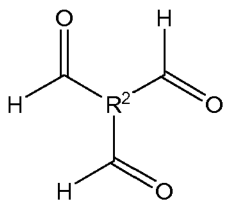

(IIa)

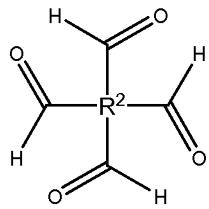

(IIb)

wherein $R^2$ is selected from the group consisting of substituted and un-substituted aryl groups, and substituted and un-substituted macrocyclic groups; and
wherein:

i) each diamine subunit of formula I is bonded with at least one aldehyde subunit of formula IIa or IIb, by an imine bond,
ii) each triamine of formula Ia is bonded to at least one aldehyde subunit of formula II or IIa, by an imine bond, or
iii) each tetramine of formula Ib is bonded to at least one aldehyde subunit of formula II or IIb, by an imine bond;

wherein said method comprises the following steps:
a) adding a plurality of amine subunits of formula I, Ia or Ib to a first organic solvent;
b) adding a plurality of aldehyde subunits of formula II, IIa or IIb to a second organic solvent; and
c) mixing together the solutions obtained in steps a) and b).

2. The method according to claim 1, further comprising:

d) adding an acid solution to the resulting mixture of step c); and
e) filtrating the product obtained in step d).

3. The method according to any of claims 1 to 2, further **characterized in that** the combination of the first organic solvent and the second organic solvent of steps a) and b) gives a factor F higher than 50.

4. The method according to claim 3, wherein each of the first organic solvent and the second organic solvent of steps a) and b) are independently selected from the group consisting of the group of m-cresol, dimethyl sulfoxide and

mixtures thereof.

**5.** The method according to any of claims 1 to 2, further **characterized in that** the combination of the first organic solvent and the second organic solvent of steps a) and b) gives a factor F lower than 50.

**6.** The method according to claim 5 wherein each of the first organic solvent and the second organic solvent of steps a) and b) are independently selected from the group consisting of the group of dichloromethane, chloroform, methanol, ethanol, acetone, tetrahydrofuran and mixtures thereof.

**7.** COFs obtainable according to the method of any of claims 1 to 6.

**8.** COFs obtainable according to the method of any of claims 1 to 4, wherein the COFs are in the form of a gel.

**9.** COFs obtainable according to the method of any of claims 2, 5 and 6, wherein the COFs are in the form of a solid with sphere-like microstructure.

**10.** COFs comprising:

a plurality of amine subunits selected from the group consisting of diamines of formula I, triamines of formula Ia and tetraamines of formula Ib,

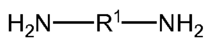
(I)

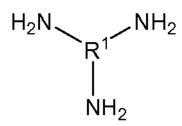
(Ia)

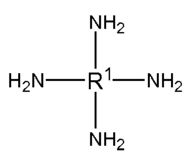
(Ib)

wherein $R^1$ is selected from the group consisting of substituted and un-substituted aryl groups, and substituted and un-substituted macrocyclic groups, and
a plurality of aldehyde subunits selected from the group consisting of dialdehydes of formula II, trialdehydes of formula IIa and tetraaldehydes of formula IIb,

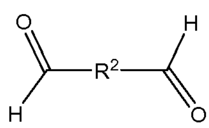
(II)

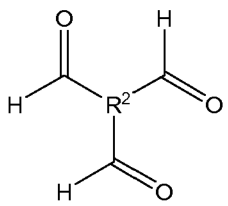
(IIa)

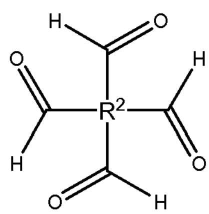
(IIb)

wherein $R^2$ is selected from the group consisting of substituted and un-substituted aryl groups, and substituted and un-substituted macrocyclic groups; and
wherein:

i) each diamine subunit of formula I is bonded with at least one aldehyde subunit of formula IIa or IIb, by an imine bond,
ii) each triamine of formula Ia is bonded to at least one aldehyde subunit of formula II or IIa, by an imine bond, or
iii) each tetramine of formula Ib is bonded to at least one aldehyde subunit of formula II or IIb, by an imine bond;

**characterized in that** the COFs are in the form of a gel or a solid with sphere-like microstructure.

**11.** The COFs according to claim 10, wherein the COFs in the form of a gel comprise layers with an average thickness between 300 and 0.3 nm.

**12.** The COFs according to claim 10, wherein the COFs in the form of a solid with sphere-like microstructure comprise spheres with an average diameter between 10 and 1000 nm.

**13.** The COFs according to any of claims 10 to 12, wherein:

a) the amine subunits are selected from the group consisting of substituted and un-substituted 1,3,5-triaminobenzene, substituted and un-substituted 1,3,5-tris(4-aminophenyl)benzene, substituted and un-substituted 1,3,6,8-tetrakis(4-aminophenyl)pyrene, substituted and un-substituted 5,10,15,20-tetrakis(4-aminophenyl)phorphyrin and substituted and un-substituted tetrakis[(4-aminophenyl)dioxaborolane]phtalocyanine, and
b) the aldehyde subunits are selected from the group consisting of substituted and un-substituted 1,3,5-benzenetricarbaldehyde, substituted and un-substituted 1,3,5-tris(4-formylphenyl)benzene, substituted and unsubstituted 1,3,6,8-tetrakis(4-formylphenyl)pyrene, substituted and un-substituted 5,10,15,20-tetrakis(4-formylphenyl)phorphyrin and substituted and un-substituted tetrakis[(4-formylphenyl)dioxaborolane]phtalocyanine.

**14.** The COFs according to any of claims 10 to 13 further comprising a metal atom coordinated to iminic nitrogens, in particular said metal atom is selected from the group consisting of Mn, Fe, Co, Ni, Ru, Pt, Pd, Rh, Ir, Au, Nd, Eu and mixtures thereof.

**15.** Use of the COFs in the form of a gel according to any of claims 10, 11, 13 and 14 for coating surfaces, ink-jet printing and spray deposition.

**16.** Use of the COFs in the form of a solid with sphere-like microstructure according to any of claims 10, 12, 13 and 14 for material encapsulation and coordination chemistry.

**17.** A device selected from the group consisting of solar cells, flexible displays, lighting devices, sensors, photoreceptors, batteries, capacitators, gas storage devices and gas separation devices, comprising the COFs according to any of claims 10 to 14.

Figure 1

i)

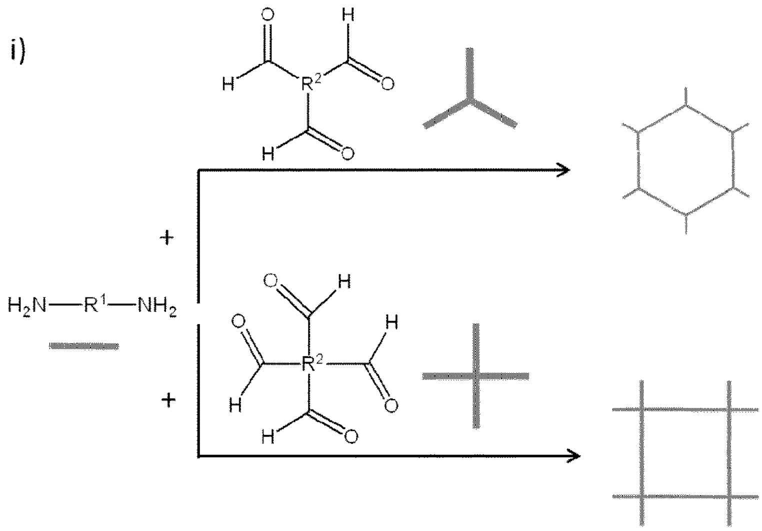

ii)

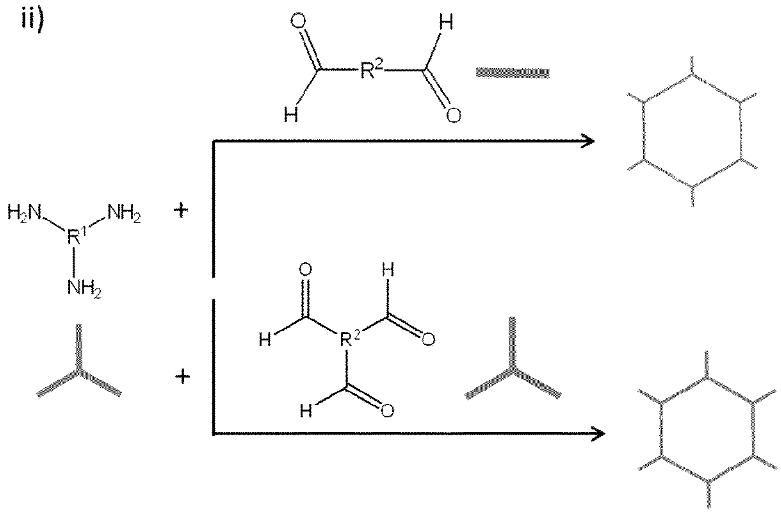

iii)

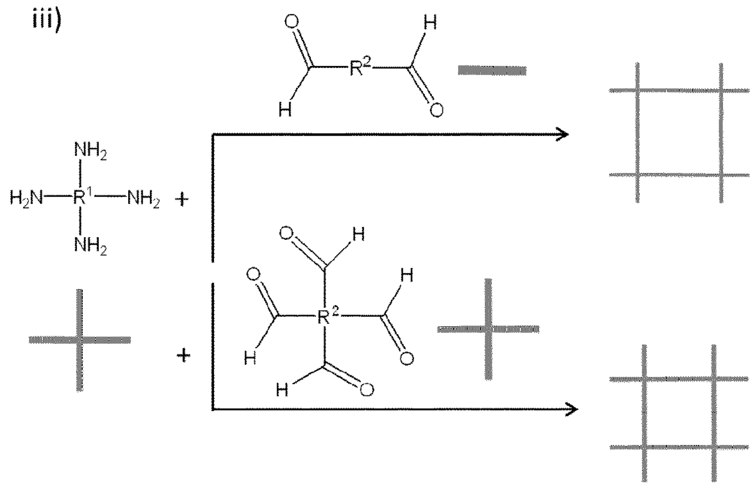

Figure 2

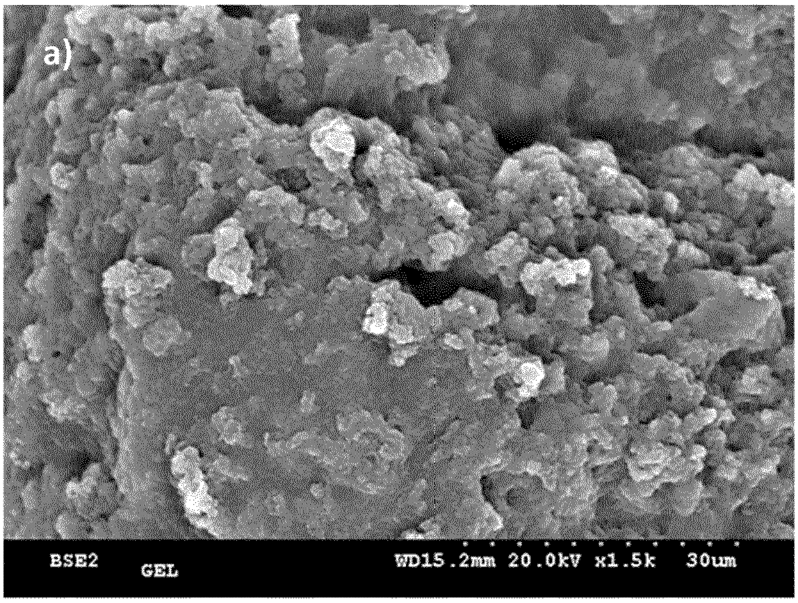
a)
BSE2
GEL
WD15.2mm 20.0kV x1.5k 30um

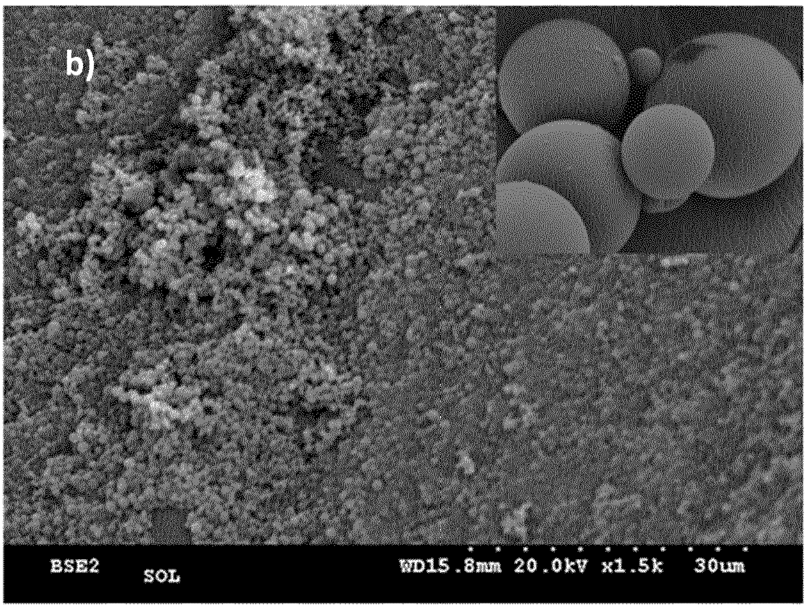
b)
BSE2
SOL
WD15.8mm 20.0kV x1.5k 30um

Figure 3

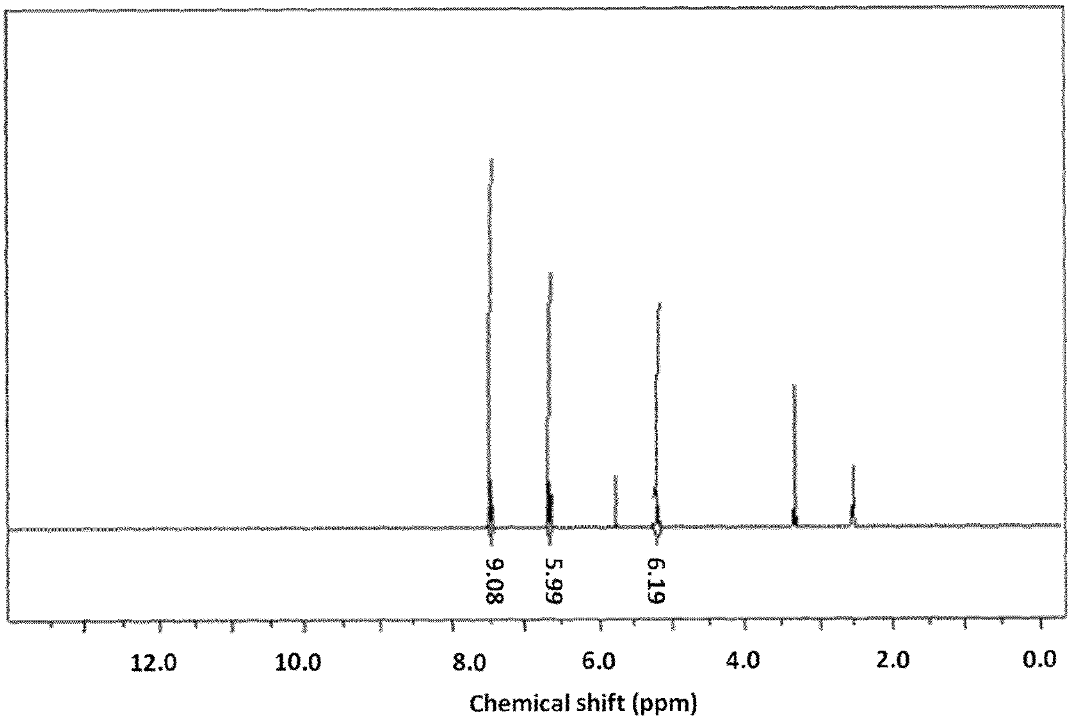


Figure 4

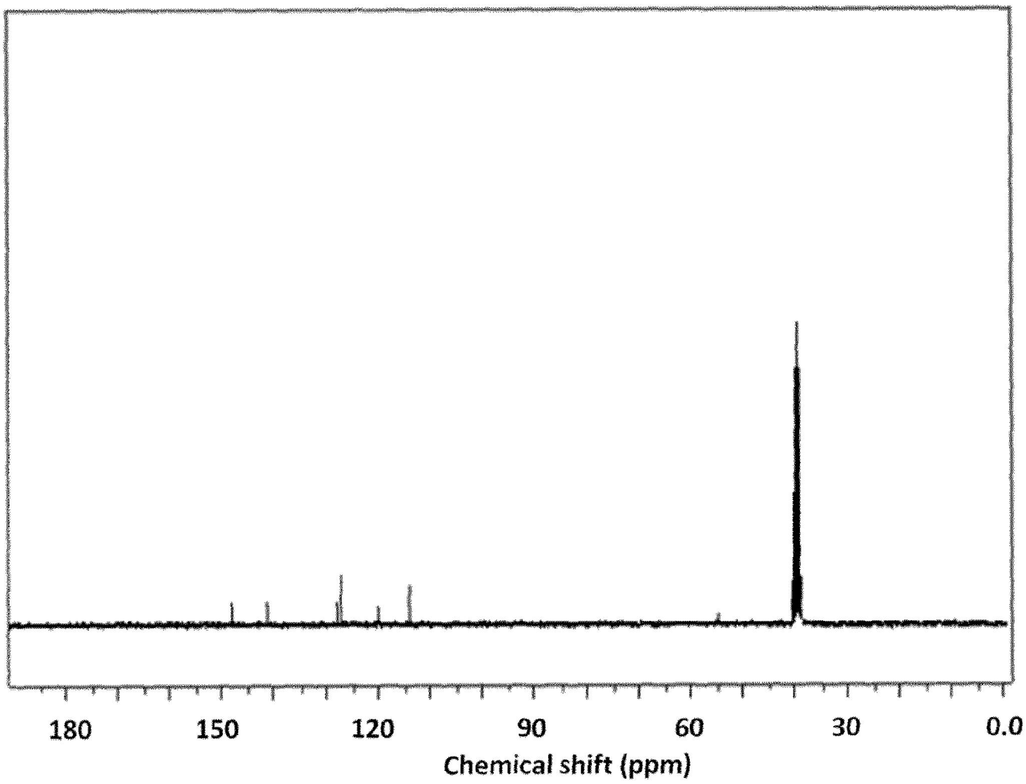

Figure 5

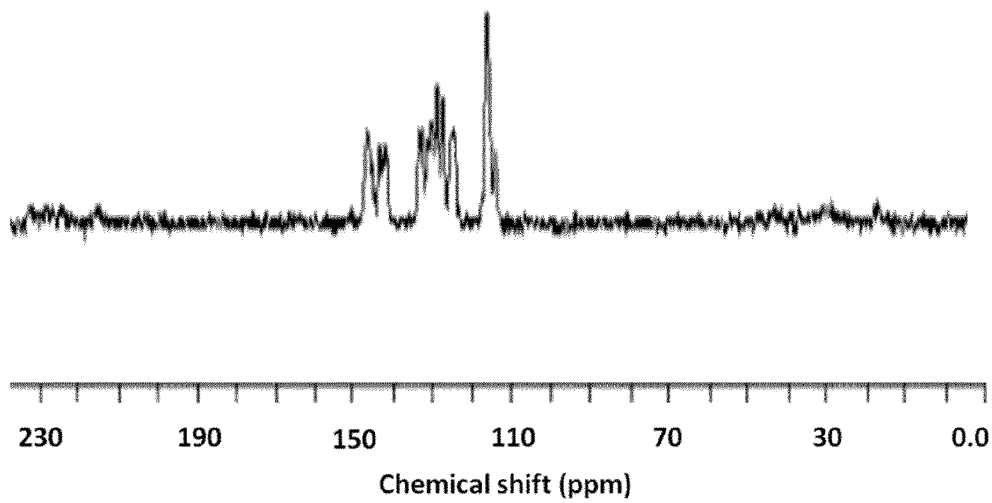


Figure 6

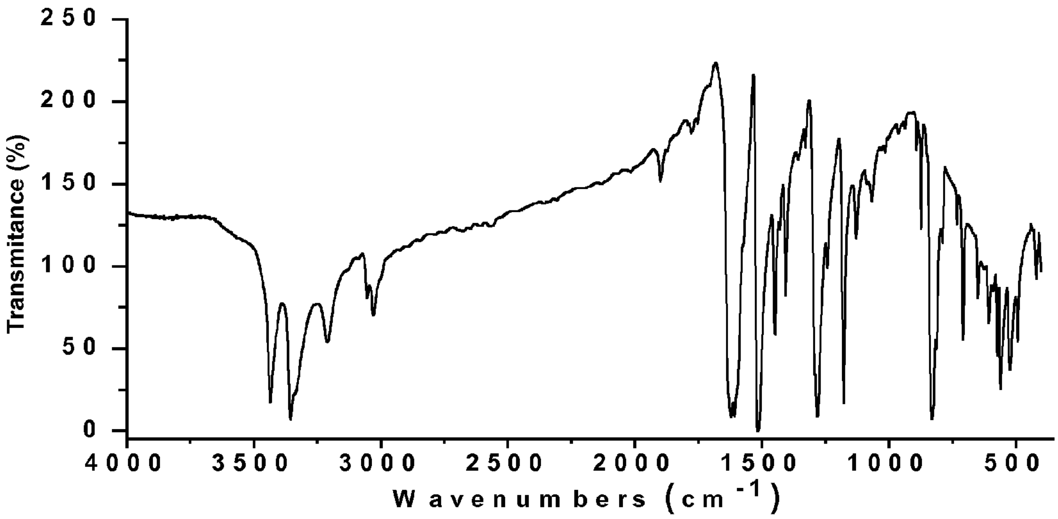

Figure 7

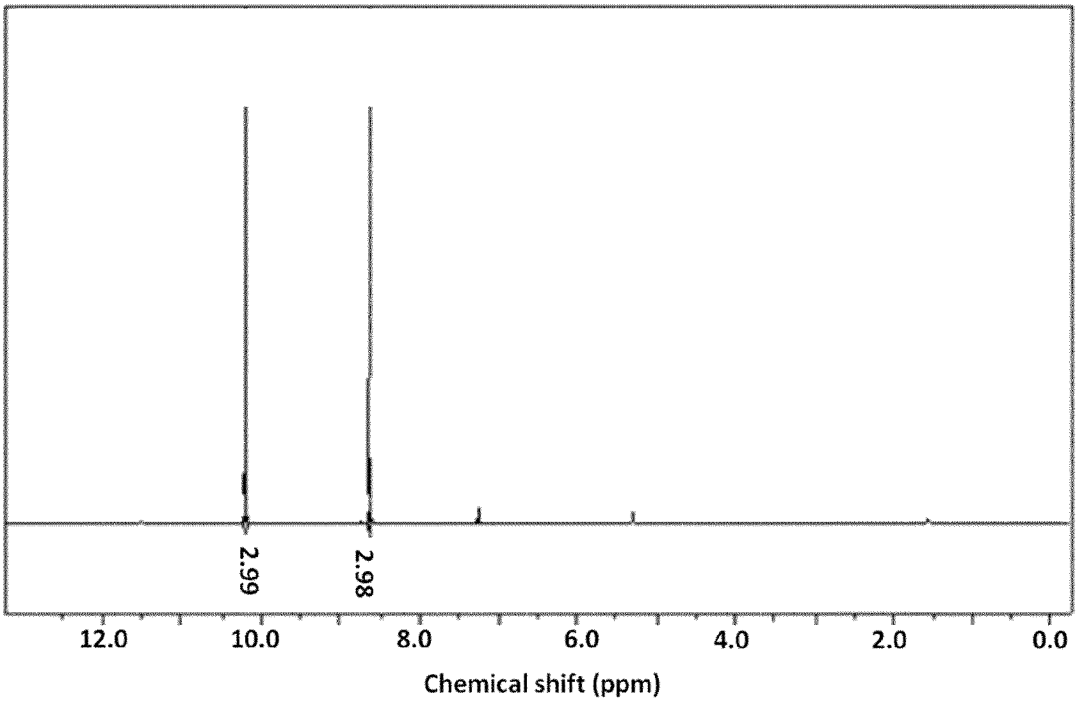


Figure 8

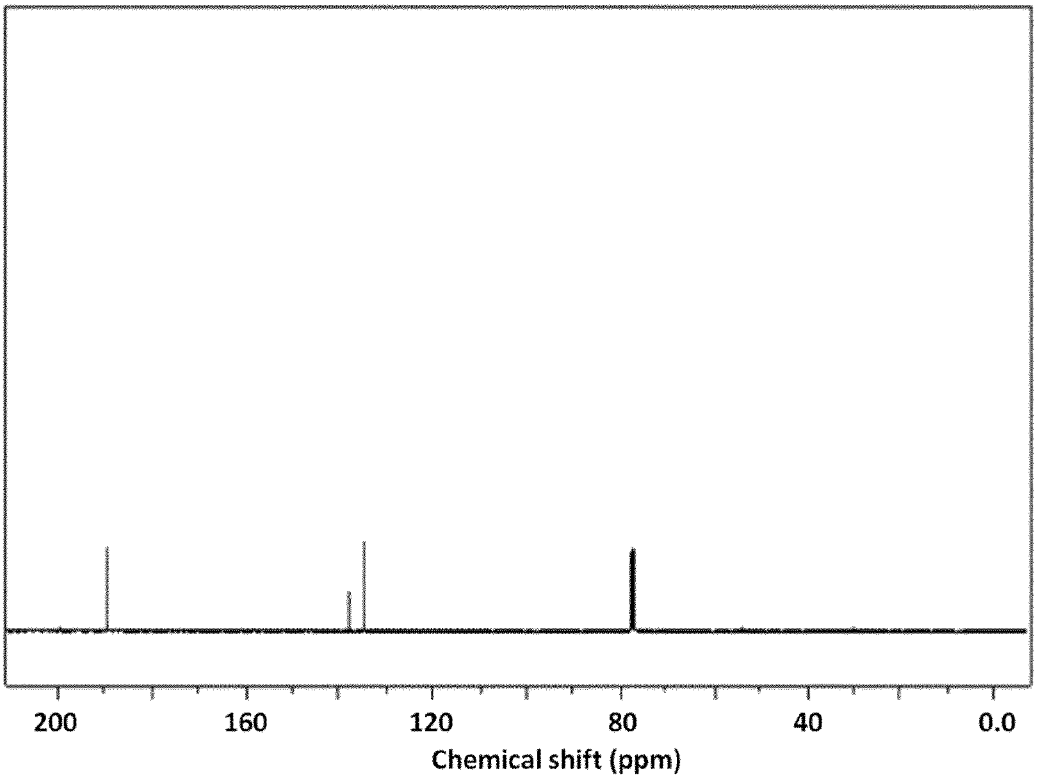

Figure 9

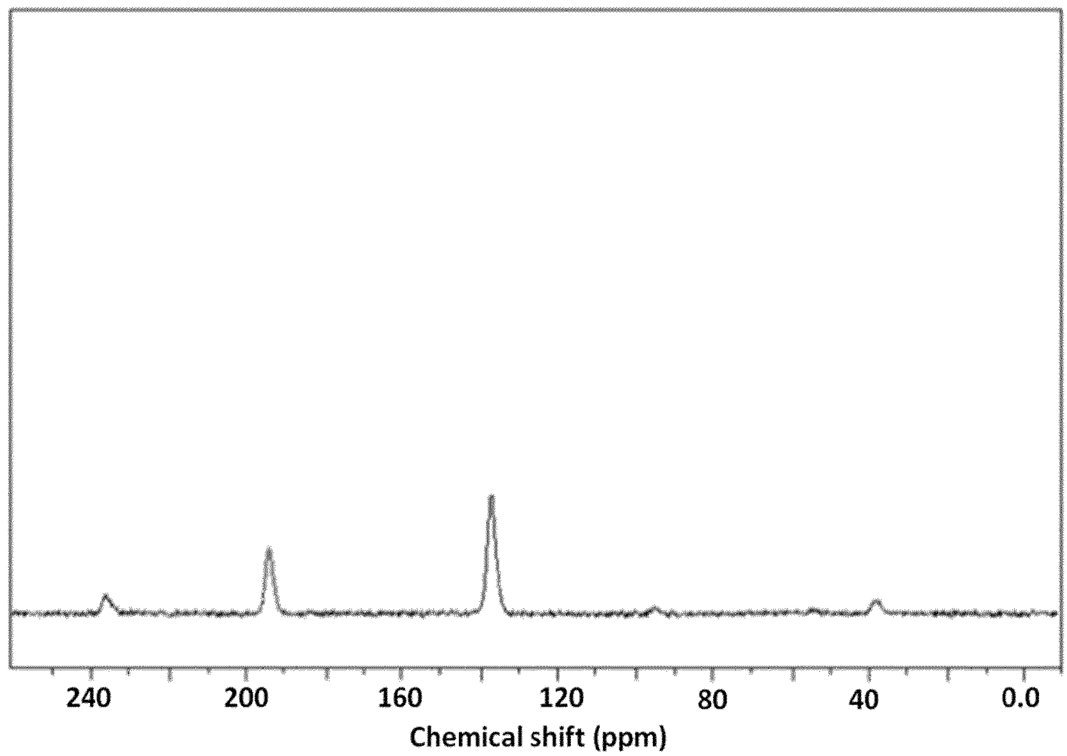


Figure 10

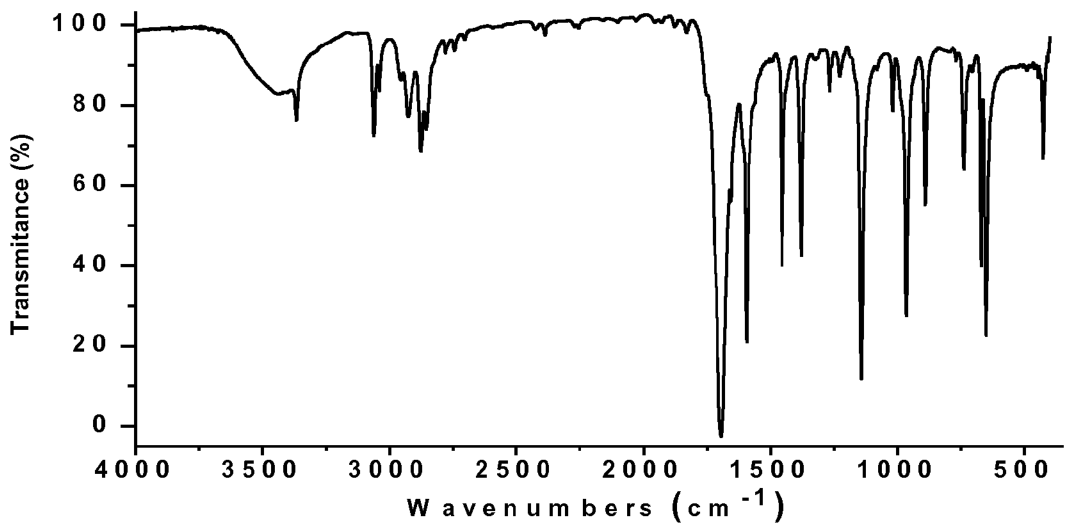

Figure 11

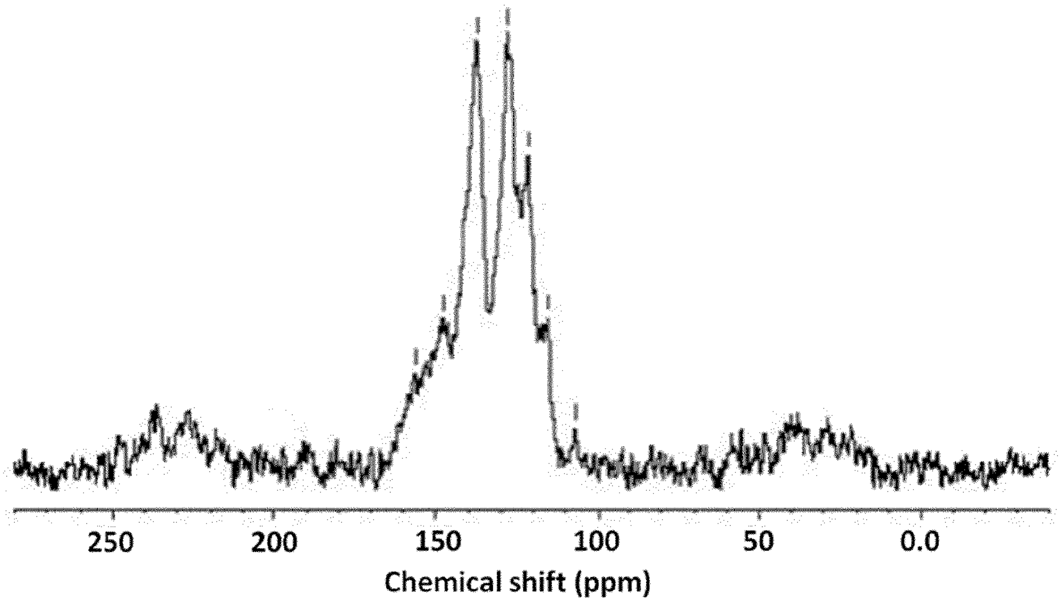


Figure 12

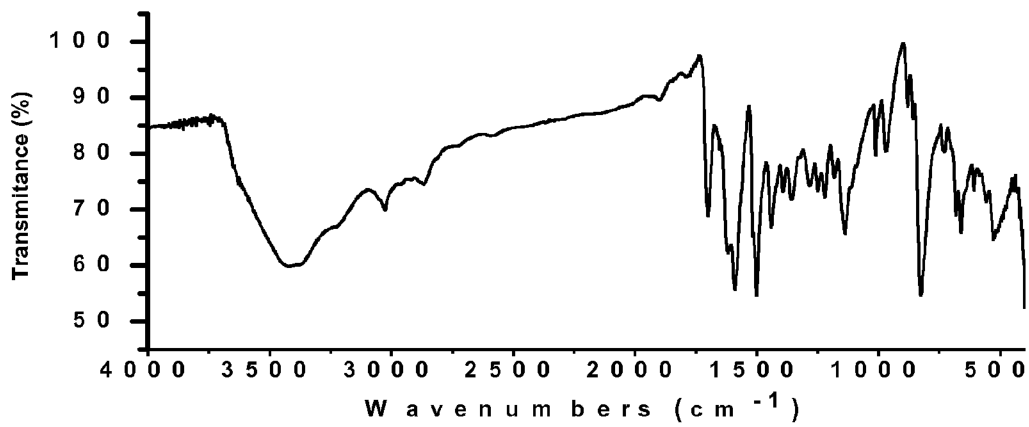

Figure 13

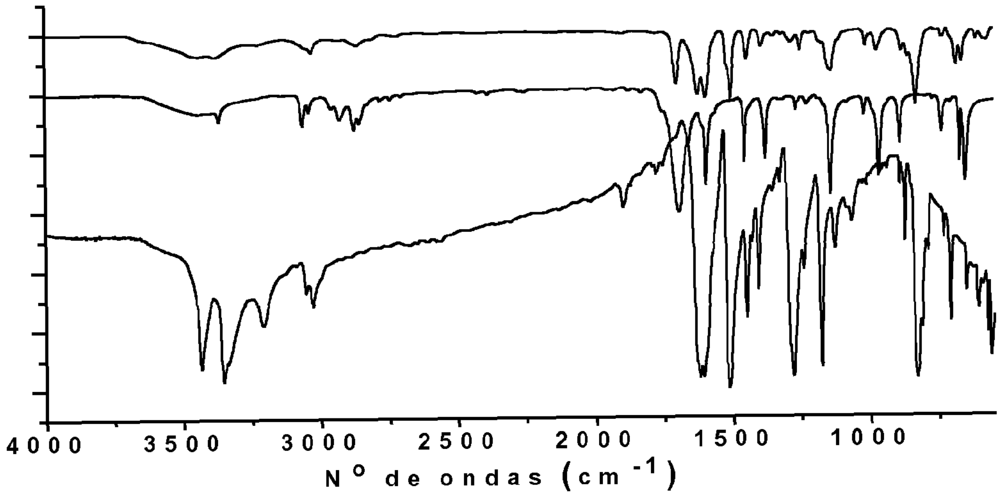

Figure 14

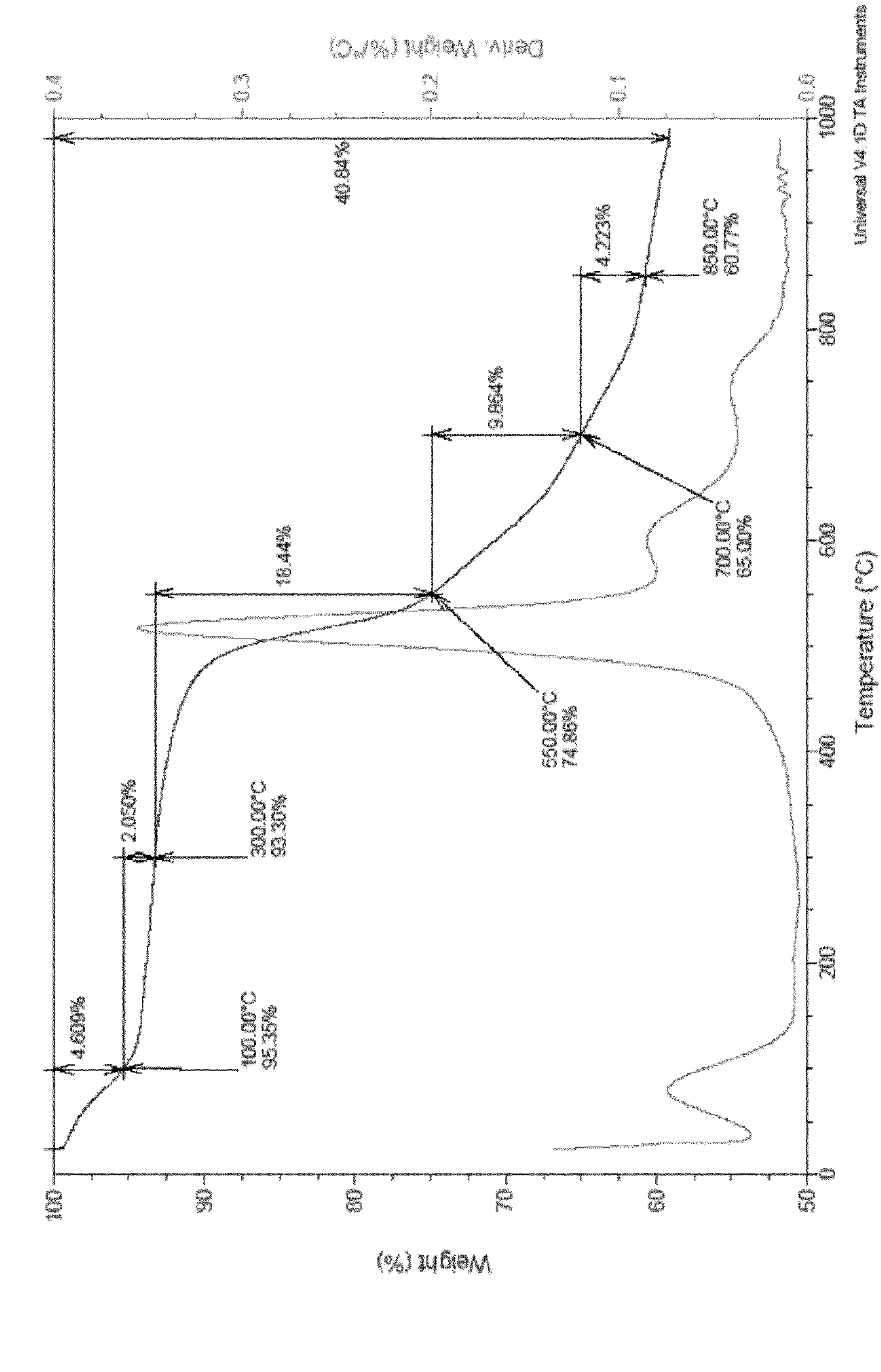

Weight (%)
Deriv. Weight (%/°C)
Temperature (°C)
Universal V4.1D TA Instruments
4.609%
100.00°C
95.35%
2.050%
300.00°C
93.30%
18.44%
550.00°C
74.86%
9.864%
700.00°C
65.00%
4.223%
850.00°C
60.77%
40.84%

**Figure 15**

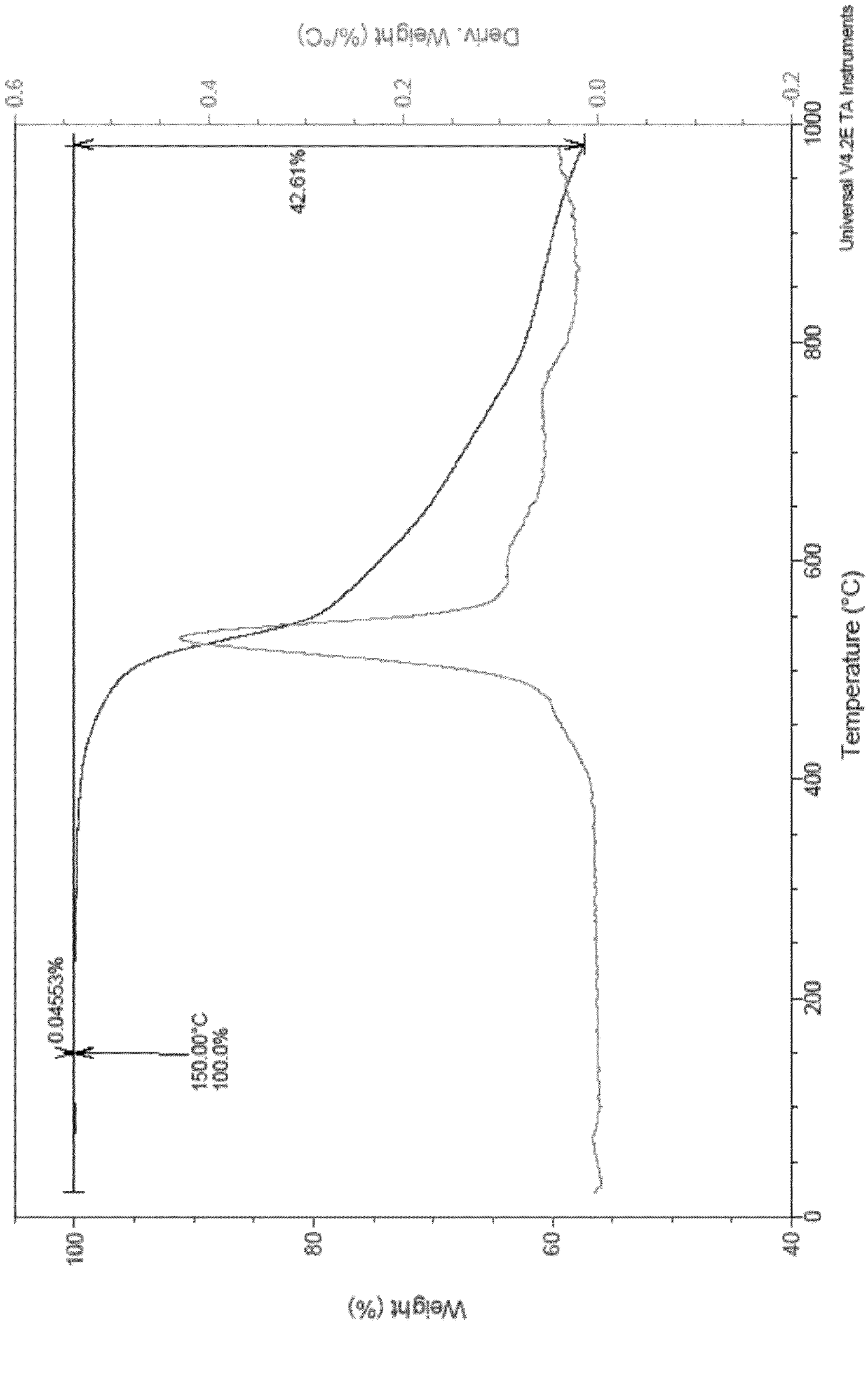
Deriv. Weight (%/°C)
Weight (%)
Temperature (°C)
Universal V4.2E TA Instruments
42.61%
0.04553%
150.00°C
100.0%
0.6
0.4
0.2
0.0
-0.2
100
80
60
40
0
200
400
600
800
1000

Figure 16

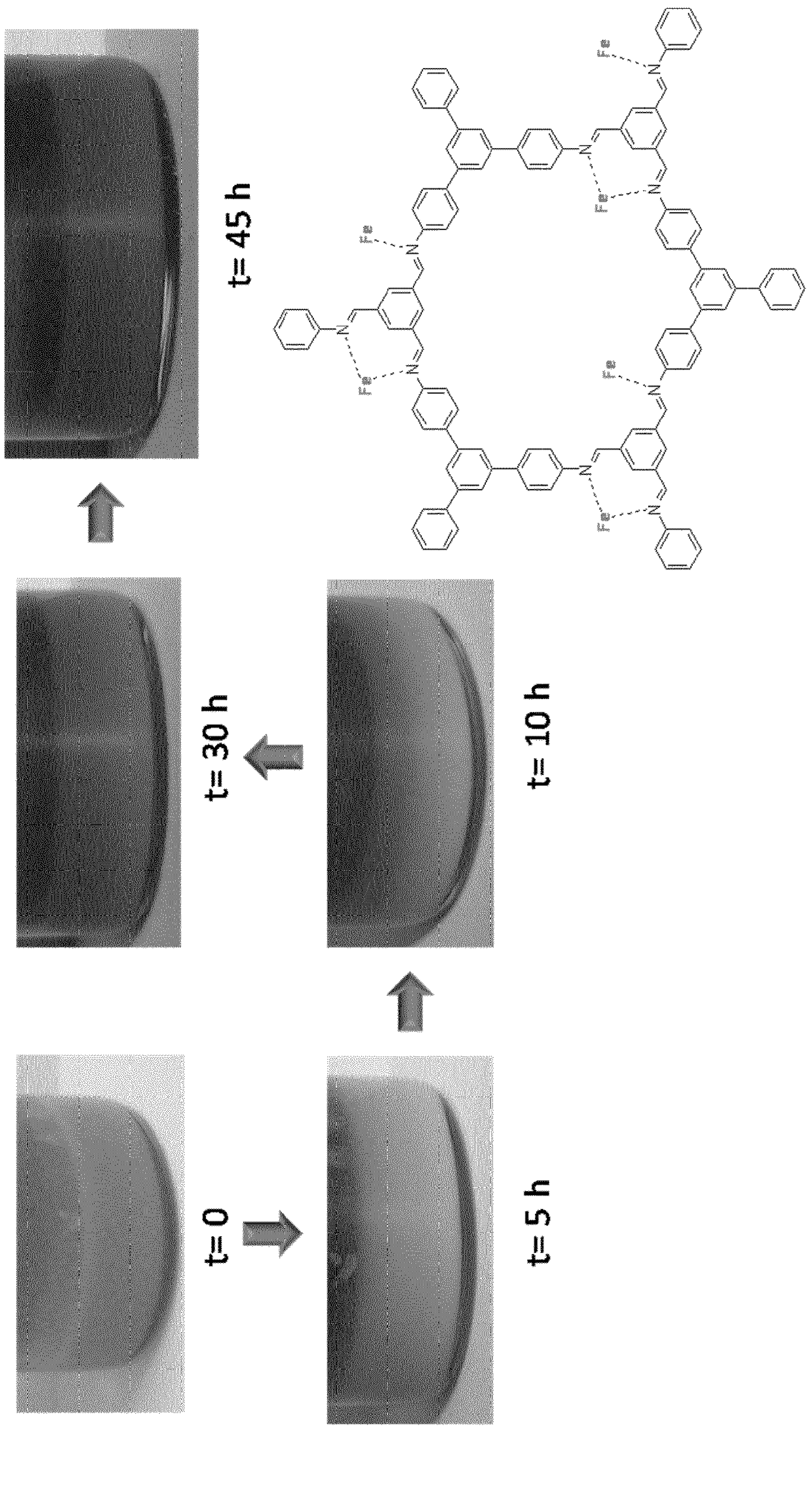

Figure 17

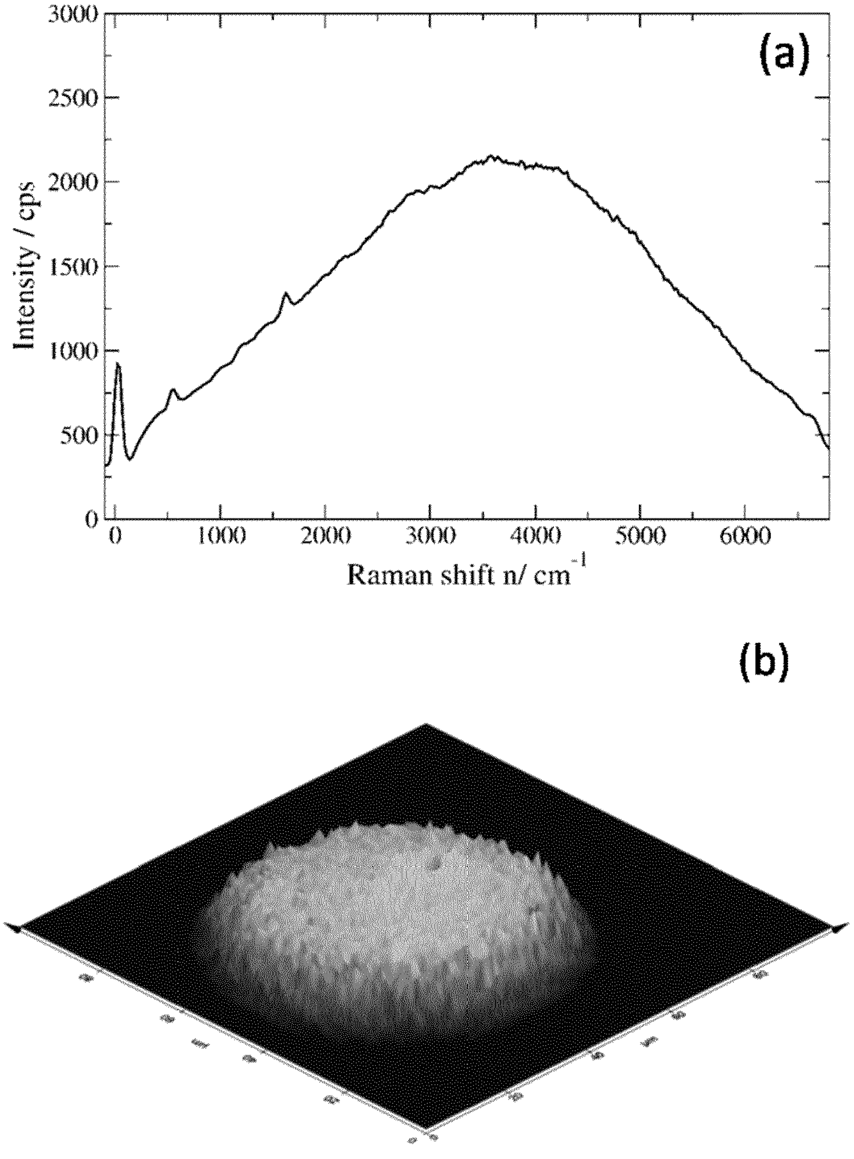
(a)
3000
2500
2000
1500
1000
500
0
Intensity / cps
0
1000
2000
3000
4000
5000
6000
Raman shift n/ cm-1
(b)

Figure 18

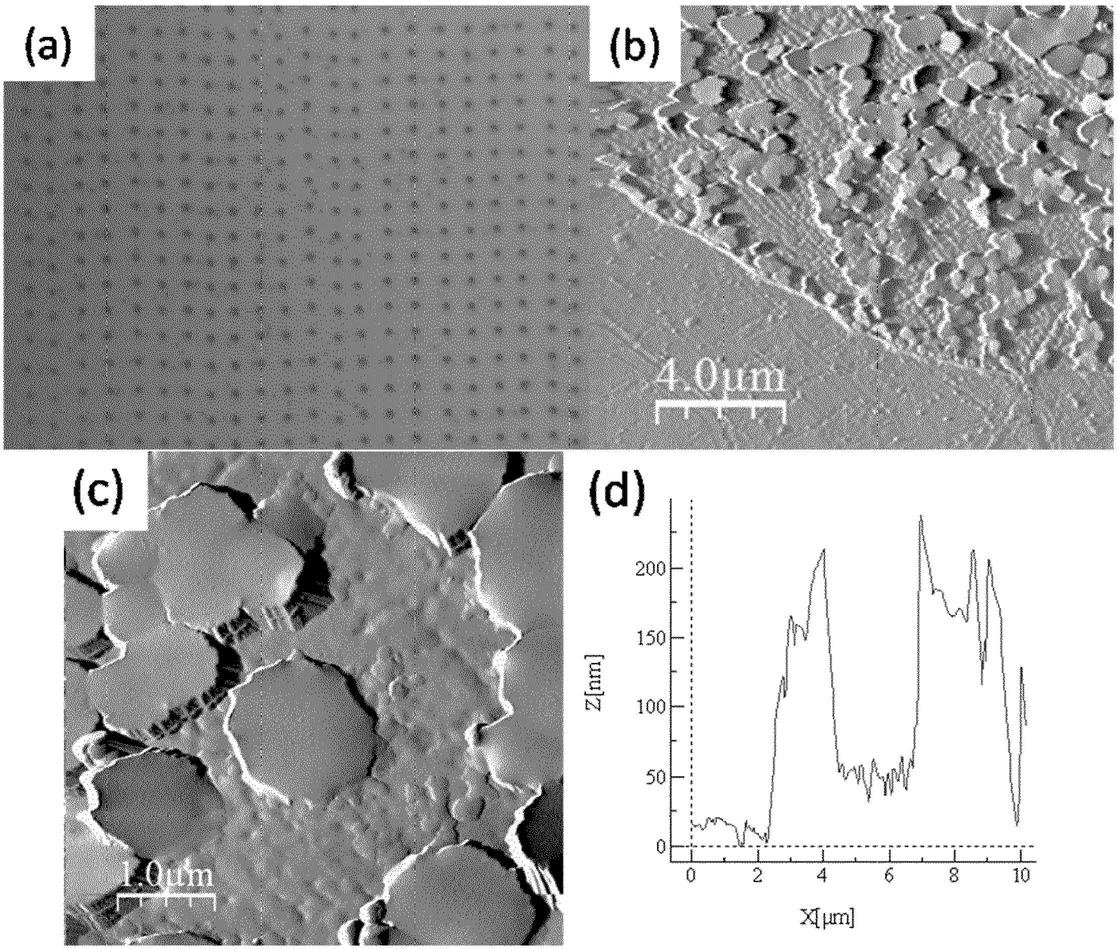

Europäisches Patentamt
European Patent Office
Office européen des brevets

# EUROPEAN SEARCH REPORT

Application Number
EP 13 38 2313

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/224867 A1 (HEUFT MATTHEW A [CA] ET AL) 9 September 2010 (2010-09-09)<br>* example 31 *<br>* claims *<br>----- | 1-17 | INV.<br>C08G73/02<br>G03G5/05 |
| A | WO 2012/039683 A1 (AGENCY SCIENCE TECH & RES [SG]; ZHANG YUGEN [SG]; YING JACKIE Y [SG];) 29 March 2012 (2012-03-29)<br>* claims; examples *<br>----- | 1-17 | |

TECHNICAL FIELDS SEARCHED (IPC)

C08G
G03G

The present search report has been drawn up for all claims

1

| Place of search | Date of completion of the search | Examiner |
|---|---|---|
| Munich | 2 December 2013 | West, Nuki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 38 2313

This annex lists the patent family members relating to the patent documents cited in the above-mentioned European search report. The members are as contained in the European Patent Office EDP file on
The European Patent Office is in no way liable for these particulars which are merely given for the purpose of information.

02-12-2013

| Patent document cited in search report | Publication date | Patent family member(s) | Publication date |
|---|---|---|---|
| US 2010224867 A1 | 09-09-2010 | CA 2753863 A1 | 10-09-2010 |
| | | CA 2753891 A1 | 10-09-2010 |
| | | CA 2753904 A1 | 10-09-2010 |
| | | CA 2753940 A1 | 10-09-2010 |
| | | CA 2753945 A1 | 10-09-2010 |
| | | CA 2753996 A1 | 10-09-2010 |
| | | CN 102341186 A | 01-02-2012 |
| | | CN 102341187 A | 01-02-2012 |
| | | CN 102413948 A | 11-04-2012 |
| | | CN 102413949 A | 11-04-2012 |
| | | CN 102413970 A | 11-04-2012 |
| | | CN 102414215 A | 11-04-2012 |
| | | EP 2403655 A1 | 11-01-2012 |
| | | EP 2403656 A1 | 11-01-2012 |
| | | EP 2403657 A1 | 11-01-2012 |
| | | EP 2403670 A1 | 11-01-2012 |
| | | EP 2403858 A1 | 11-01-2012 |
| | | EP 2408572 A1 | 25-01-2012 |
| | | JP 2012519584 A | 30-08-2012 |
| | | JP 2012519585 A | 30-08-2012 |
| | | JP 2012519757 A | 30-08-2012 |
| | | JP 2012519758 A | 30-08-2012 |
| | | JP 2012519759 A | 30-08-2012 |
| | | JP 2012519961 A | 30-08-2012 |
| | | KR 20110130455 A | 05-12-2011 |
| | | KR 20110134894 A | 15-12-2011 |
| | | KR 20110135950 A | 20-12-2011 |
| | | KR 20110135951 A | 20-12-2011 |
| | | KR 20110135953 A | 20-12-2011 |
| | | KR 20110139247 A | 28-12-2011 |
| | | US 2010224867 A1 | 09-09-2010 |
| | | US 2010227071 A1 | 09-09-2010 |
| | | US 2010227081 A1 | 09-09-2010 |
| | | US 2010227157 A1 | 09-09-2010 |
| | | US 2010227998 A1 | 09-09-2010 |
| | | US 2010228025 A1 | 09-09-2010 |
| | | US 2012082835 A1 | 05-04-2012 |
| | | US 2013137033 A1 | 30-05-2013 |
| | | WO 2010102018 A1 | 10-09-2010 |
| | | WO 2010102025 A1 | 10-09-2010 |
| | | WO 2010102027 A1 | 10-09-2010 |
| | | WO 2010102036 A1 | 10-09-2010 |
| | | WO 2010102038 A1 | 10-09-2010 |
| | | WO 2010102043 A1 | 10-09-2010 |
| WO 2012039683 A1 | 29-03-2012 | CN 103221127 A | 24-07-2013 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 38 2313

This annex lists the patent family members relating to the patent documents cited in the above-mentioned European search report. The members are as contained in the European Patent Office EDP file on
The European Patent Office is in no way liable for these particulars which are merely given for the purpose of information.

02-12-2013

| Patent document cited in search report | Publication date | Patent family member(s) | Publication date |
|---|---|---|---|
| | | EP 2618928 A1 | 31-07-2013 |
| | | SG 188556 A1 | 30-04-2013 |
| | | US 2013189175 A1 | 25-07-2013 |
| | | WO 2012039683 A1 | 29-03-2012 |

-----------------------------------------------------------------

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012082213 A2
- WO 2011127301 A2


### Non-patent literature cited in the description


- **CÔTÉ, A.P. et al.** *Science,* 2005, vol. 310, 1166-70
- **MASTALERZ, M.** *Angew. Chem. Int. Ed.,* 2008, vol. 47, 445-7
- **CAMPBELL, N.L. et al.** *Chem. Mater.,* 2009, vol. 21, 204-6
- **FURUKAWA, H. et al.** *J. Am. Chem. Soc.,* 2009, vol. 131, 8875-83
- **EL-KADERI, H.M. et al.** *Science,* 2007, vol. 316, 268-72
- **TILFORD R.W. et al.** *Chem. Mater.,* 2006, vol. 18, 5296-301
- **DOGRU M. et al.** *Chem. Commun.,* 2011, vol. 47, 1707-9
- **FENG, X. et al.** *Chem. Commun.,* 2011, vol. 47, 1979-81
- **BOJDYS M.J. et al.** *Adv. Mater.,* 2010, vol. 22, 2202-5
- **URIBE-ROMO, F.J. et al.** *J. Am. Chem. Soc.,* 2009, vol. 131, 4570-1
- **DAWSON, R. et al.** *Progress in Polymer Science,* 2012, vol. 37, 530-563
- **DING, S.-Y. et al.** *J. Am. Chem. Soc.,* 2011, vol. 133, 19816-19822
- **PANDEY, P. et al.** *Chem. Mater.,* 2010, vol. 22, 4974-9